# EUROPEAN PATENT APPLICATION

(11) **EP 4 529 099 A1**
(43) Date of publication of application: **26.03.2025**
(21) Application number: 23823031.2
(22) Date of filing: 09.06.2023
(51) Int. Cl.: H04L 12/46, H04W 36/08

(54) **COMMUNICATION METHOD AND COMMUNICATION APPARATUS**

(30) Priority: 15.06.2022 CN 202210675608
(71) Applicant: Huawei Technologies Co., Ltd., Shenzhen, Guangdong 518129 (CN)
(72) Inventor: GU, Zhifang, Shenzhen, Guangdong 518129 (CN); LOU, Chong, Shenzhen, Guangdong 518129 (CN); HU, Xingxing, Shenzhen, Guangdong 518129 (CN); ZHANG, Hongzhuo, Shenzhen, Guangdong 518129 (CN)
(74) Representative: Körber, Martin Hans
(86) International application number: PCT/CN2023/099260
(87) International publication number: WO 2023/241463

(57) **Abstract**

This application provides a communication method and a communication apparatus, to avoid a cell handover failure caused by an unclear handover behavior of a terminal device, and improve reliability of a cell handover process. In the method, after a DU sends a first handover message to a terminal device, the DU receives a second handover message from a CU, where the first handover message indicates to hand over the terminal device from a source cell to a first target cell in a first manner, the first manner includes an L1 and/or L2-based cell handover manner, the second handover message indicates to hand over the terminal device from the source cell to a second target cell in a second manner, and the second manner includes an L3-based cell handover manner. The DU determines that a cell handover manner of the terminal device is the first manner or the second manner.

## Description

This application claims priority to Chinese Patent Application No. 202210675608.9, filed with the China National Intellectual Property Administration on June 15, 2022 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In a communication system, due to movement of a terminal device, fluctuation of a network signal, or another reason, a network device may hand over the terminal device from one cell to another cell, to maintain continuity of a communication service of the terminal device. This handover process may be referred to as cell handover. To be specific, in a cell handover process, the network device hands over the terminal device from a source cell to a target cell.

Currently, it is proposed in the 3rd generation partnership project (3rd generation partnership project, 3GPP) R15 that a network device may be logically split into a central unit (central unit, CU) and a distributed unit (distributed unit, DU), in other words, the network device may be implemented by using a CU-DU split architecture. The CU-DU split architecture can also be compatible with the cell handover process. For example, the CU obtains a measurement report sent by a terminal device, where the measurement report includes measurement information of a source cell and measurement information of one or more neighboring cells, so that the CU serves as a cell handover decision party. To be specific, the CU may determine, based on the measurement report, whether the terminal device needs to perform cell handover, and when the CU determines that the terminal device needs to perform cell handover, the CU sends a cell handover command to the terminal device.

However, in the CU-DU split architecture, the DU may also serve as a cell handover decision party, that is, the DU may also send a cell handover command to the terminal device. As a result, when the CU and the DU each send the cell handover command to the terminal device, because the terminal device may receive different cell handover commands, a handover behavior of the terminal device is unclear, and consequently, cell handover of the terminal device may fail.

### SUMMARY

This application provides a communication method and a communication apparatus, to avoid a cell handover failure caused by an unclear handover behavior of a terminal device, and improve reliability of a cell handover process.

A first aspect of this application provides a communication method. The method is performed by a DU, the method is performed by a part of components (for example, a processor, a chip, or a chip system) in the DU, or the method may be implemented by a logical module or software that can implement all or some functions of the DU. In the first aspect and the possible implementations of the first aspect, an example in which the communication method is performed by the DU is used for description. In the method, after the DU sends a first handover message to a terminal device, the DU receives a second handover message from a CU, where the first handover message indicates to hand over the terminal device from a source cell to a first target cell in a first manner, the first manner includes an L1 and/or L2-based cell handover manner, the second handover message indicates to hand over the terminal device from the source cell to a second target cell in a second manner, and the second manner includes an L3-based cell handover manner. The DU determines that a cell handover manner of the terminal device is the first manner or the second manner.

Based on the foregoing technical solution, when the DU initiates an L1 and/or L2 cell handover process to the terminal device based on the first handover message, and the CU initiates an L3 cell handover process to the terminal device based on the second handover message, the DU determines that the cell handover manner of the terminal device is either of the first manner and the second manner, so that the DU can subsequently initiate a cell handover process based on the either of the first manner and the second manner. In other words, when the DU makes a cell handover decision result based on the first manner and the CU makes a cell handover decision result based on the second manner, the DU initiates the cell handover process based on the either of the first manner and the second manner in a DU decision manner, to avoid a cell handover failure caused by an unclear handover behavior of the terminal device, and improve reliability of the cell handover process.

It should be understood that, in the first manner of this application, L1 means a layer 1 (layer 1, L1), where the layer 1 may be referred to as a physical (physical, PHY) layer; and L2 means a layer 2 (layer 2, L2), where the layer 2 includes a media access control (media access control, MAC) layer. In the second manner of this application, L3 means a layer 3 (layer 3, L3), where the layer 3 may be referred to as a radio resource control (radio resource control, RRC) layer.

Optionally, L2 further includes a radio link control (radio link control, RLC) layer, a packet data convergence protocol (packet data convergence protocol, PDCP) layer, and a service data adaptation protocol (service data adaptation protocol, SDAP) layer.

In this application, the first target cell indicated by the first handover message and the second target cell indicated by the second handover message may be a same cell; or the first target cell indicated by the first handover message and the second target cell indicated by the second handover message may be different cells. This is not limited in this application.

In a possible implementation of the first aspect, when a first condition is met, the DU determines that the cell handover manner of the terminal device is the first manner, where the first condition includes at least one of the following: the DU determines that the second handover message includes priority information indicating a priority of the second handover message and the DU determines that the priority indicated by the priority information is lower than a preset priority; the DU determines that the terminal device is successfully handed over in the first manner; or the DU determines that a first response message is received from the terminal device, where the first response message indicates that the first handover message is successfully received.

Based on the foregoing technical solution, when at least one of the foregoing is met, the DU determines that the cell handover manner of the terminal device is the first manner. Correspondingly, the DU may not perform, by discarding (discard) the second handover message, ignoring the second handover message, or the like, the cell handover process initiated based on the second manner, to avoid a failure of the cell handover initiated based on the first manner.

In this application, the preset priority may be a priority of the first manner, the preset priority may be a preconfigured priority, or the preset priority may be implemented in another manner. This is not limited herein.

It may be understood that when the DU determines that the cell handover manner of the terminal device is the first manner, the DU may perform, based on the previously sent first handover message, the cell handover process corresponding to the first manner with the terminal device, so that the terminal device performs the cell handover process and is handed over to the first target cell.

In a possible implementation of the first aspect, after the DU determines that the cell handover manner of the terminal device is the first manner, the DU sends at least one of the following to the CU: information indicating that the terminal device successfully completes cell handover in the first manner, information indicating that the terminal device is successfully handed over to the first target cell in the first manner, information indicating that the second handover message is discarded, or information indicating that the DU does not send a third handover message, where the third handover message indicates to hand over the terminal device from the source cell to the second target cell in the second manner.

Based on the foregoing technical solution, after the DU determines that the cell handover manner of the terminal device is the first manner, the DU may perform, based on the previously sent first handover message, the cell handover process corresponding to the first manner with the terminal device, and indicate, by using the at least one of the foregoing information, to the CU that the DU determines that the cell handover manner of the terminal device is the first manner. Therefore, the CU determines, based on the at least one of the foregoing information, that the terminal device performs cell handover in the first manner, and/or the CU determines, based on the at least one of the foregoing information, that the terminal device does not perform cell handover in the second manner.

In a possible implementation of the first aspect, when a second condition is met, the DU determines that the cell handover manner of the terminal device is the second manner, where the second condition includes at least one of the following: the DU determines that the second handover message includes first indication information, where the first indication information indicates to perform cell handover preferentially in the second manner; the DU determines that the second handover message includes priority information indicating a priority of the second handover message and the DU determines that the priority indicated by the priority information is higher than a preset priority; the DU determines that the terminal device fails to be handed over in the first manner; the DU determines that a second response message is received from the terminal device, where the second response message indicates that the first handover message is not successfully received; or the DU determines that a response message for the first handover message is not received from the terminal device.

Based on the foregoing technical solution, when at least one of the foregoing is met, the DU determines that the cell handover manner of the terminal device is the second manner. Correspondingly, the DU does not perform the cell handover process initiated based on the first manner, to avoid a failure of the cell handover initiated based on the second manner.

In a possible implementation of the first aspect, after the DU determines that the cell handover manner of the terminal device is the second manner, the method further includes: The DU sends a third handover message to the terminal device, where the third handover message indicates to hand over the terminal device from the source cell to the second target cell in the second manner.

Based on the foregoing technical solution, when the DU determines that the cell handover manner of the terminal device is the second manner, the DU sends, to the terminal device, the third handover message indicating to hand over the terminal device from the source cell to the second target cell in the second manner, so that the terminal device performs, based on the third handover message, the cell handover process corresponding to the second manner.

In a possible implementation of the first aspect, the third handover message includes configuration information of the second target cell; or delta configuration information of the second target cell and second indication information, where the second indication information indicates the terminal device to perform delta configuration on the delta configuration information of the second target cell based on configuration information of the source cell.

Based on the foregoing technical solution, the third handover message sent by the DU to the terminal device may include the configuration information related to the second target cell. Therefore, after the terminal device receives the third handover message, the terminal device is handed over to the second target cell based on the configuration information related to the second target cell.

Optionally, when the third handover message does not include the configuration information related to the second target cell, the terminal device may alternatively obtain the configuration information related to the second target cell in another manner. For example, in a process in which the terminal device communicates with the source cell, the terminal device receives configuration information of a neighboring cell from the source cell, where the neighboring cell includes the second target cell. For another example, in a process in which the terminal device communicates with the CU, the terminal device receives configuration information of a plurality of cells from the CU, and the plurality of cells include the second target cell.

In a possible implementation of the first aspect, after the DU determines that the cell handover manner of the terminal device is the second manner, the DU sends at least one of the following to the CU: information indicating that the terminal device successfully performs cell handover in the second manner, or information indicating that the terminal device is successfully handed over to the second target cell in the second manner.

Based on the foregoing technical solution, after the DU determines that the cell handover manner of the terminal device is the second manner, the DU may perform, based on the third handover message, the cell handover process corresponding to the second manner with the terminal device, and indicate, by using the at least one of the foregoing information, to the CU that the DU determines that the cell handover manner of the terminal device is the second manner. Therefore, the CU determines, based on the at least one of the foregoing information, that the terminal device performs cell handover in the second manner.

A second aspect of this application provides a communication method. The method is performed by a central unit (central unit, CU), the method is performed by a part of components (for example, a processor, a chip, or a chip system) in the CU, or the method may be implemented by a logical module or software that can implement all or some functions of the CU. In the second aspect and the possible implementations of the second aspect, an example in which the communication method is performed by the CU is used for description. In the method, the CU sends a second handover message, where the second handover message indicates to hand over a terminal device from a source cell to a second target cell in a second manner, and the second manner includes an L3-based cell handover manner. The CU receives at least one of the following from a DU: information indicating that the terminal device successfully completes cell handover in a first manner, information indicating that the terminal device is successfully handed over to a first target cell in the first manner, information indicating that the second handover message is discarded, or information indicating that the DU does not send a third handover message, where the third handover message indicates to hand over the terminal device from the source cell to the second target cell in the second manner; or the CU receives at least one of the following from the DU: information indicating that the terminal device successfully performs cell handover in the second manner, or information indicating that the terminal device is successfully handed over to the second target cell in the second manner. The first manner includes an L1-based cell handover manner and/or an L2-based cell handover manner.

Based on the foregoing technical solution, when the CU initiates an L3 cell handover process to the terminal device based on the second handover message, the DU may have initiated an L1 and/or L2 cell handover process to the terminal device in advance based on a first handover message. Therefore, the DU determines that a cell handover manner of the terminal device is either of the first manner and the second manner, and the DU directly or indirectly obtains, by using the at least one of the foregoing information, the either of the first manner and the second manner determined by the DU. In other words, when the DU makes a cell handover decision result based on the first manner and the CU makes a cell handover decision result based on the second manner, the DU initiates the cell handover process based on the either of the first manner and the second manner in a DU decision manner, to avoid a cell handover failure caused by an unclear handover behavior of the terminal device, and improve reliability of the cell handover process.

In addition, the CU may determine, based on the at least one of the foregoing information, that the terminal device performs cell handover in the second manner, the CU determines, based on the at least one of the foregoing information, that the terminal device performs cell handover in the first manner, or the CU determines, based on the at least one of the foregoing information, that the terminal device does not perform cell handover in the second manner.

A third aspect of this application provides a communication method. The method is performed by a terminal device, the method is performed by a part of components (for example, a processor, a chip, or a chip system) in the terminal device, or the method may be implemented by a logical module or software that can implement all or some functions of the terminal device. In the third aspect and the possible implementations of the third aspect, an example in which the communication method is performed by the terminal device is used for description. In the method, after the terminal device receives a first handover message, the terminal device receives a third handover message, where the first handover message indicates to hand over the terminal device from a source cell to a first target cell in a first manner, the first manner includes an L1-based cell handover manner and/or an L2-based cell handover manner, and the third handover message indicates to hand over the terminal device from the source cell to a second target cell in a second manner. The terminal device is handed over to the second target cell in the second manner.

Based on the foregoing technical solution, when a DU initiates an L1 and/or L2 cell handover process to the terminal device based on the first handover message, a CU initiates an L3 cell handover process to the terminal device based on a second handover message, and the DU determines that a cell handover manner of the terminal device is the second manner, the terminal device receives the third handover message indicating to hand over the terminal device from the source cell to the second target cell in the second manner, and the terminal device performs the cell handover process of the second manner based on the third handover message. In other words, when the DU makes a cell handover decision result based on the first manner and the CU makes a cell handover decision result based on the second manner, the DU initiates the cell handover process based on the second manner in a DU decision manner, to avoid a cell handover failure caused by an unclear handover behavior of the terminal device, and improve reliability of the cell handover process.

In a possible implementation of the third aspect, when the terminal device receives the third handover message, the terminal device determines that the terminal device is not handed over to the first target cell, and that the terminal device is handed over to the second target cell in the second manner includes: The terminal device determines to suspend handover to the first target cell, and the terminal device is handed over to the second target cell in the second manner.

Based on the foregoing technical solution, when the terminal device receives the third handover message from the DU, the terminal device determines to be handed over to the second target cell in the second manner. Therefore, when the terminal device currently does not complete the handover to the first target cell, the terminal device suspends a process of the handover to the first target cell, to ensure that the terminal device can be handed over to the second target cell in the second manner, and avoid unnecessary overheads.

In a possible implementation of the third aspect, the third handover message includes an identifier of the source cell. After the terminal device receives the third handover message, when the terminal device determines that the terminal device has been handed over to the first target cell, that the terminal device is handed over to the second target cell in the second manner includes: The terminal device is handed over from the source cell to the second target cell in the second manner.

Based on the foregoing technical solution, when the terminal device receives the third handover message from the DU, the terminal device determines to be handed over to the second target cell in the second manner. Therefore, when the terminal device has currently completed the handover to the first target cell, the terminal device is to be handed over from the source cell to the second target cell in the second manner, instead of being to be handed over from the first target cell to the second target cell in the second manner, to avoid a handover failure.

In a possible implementation of the third aspect, after the terminal device receives the third handover message, when the terminal device determines that cell handover to the first target cell is not performed, that the terminal device is handed over to the second target cell in the second manner includes: The terminal device determines to suspend the handover to the first target cell, and the terminal device is handed over to the second target cell in the second manner.

Based on the foregoing technical solution, when the terminal device receives the third handover message from the DU, the terminal device determines to be handed over to the second target cell in the second manner. Therefore, when the terminal device currently does not start the handover to the first target cell, the terminal device may be handed over to the second target cell in the second manner without performing the process of the handover to the first target cell, to ensure that the terminal device can be handed over to the second target cell in the second manner, and avoid unnecessary overheads.

In a possible implementation of the third aspect, the third handover message includes configuration information of the second target cell; or the third handover message includes delta configuration information of the second target cell and second indication information, where the second indication information indicates the terminal device to perform delta configuration on the delta configuration information of the second target cell based on configuration information of the source cell.

Based on the foregoing technical solution, the third handover message that is sent by the DU and that is received by the terminal device may include the configuration information related to the second target cell. Therefore, after the terminal device receives the third handover message, the terminal device is handed over to the second target cell based on the configuration information related to the second target cell.

Optionally, when the third handover message does not include the configuration information related to the second target cell, the terminal device may alternatively obtain the configuration information related to the second target cell in another manner. For example, in a process in which the terminal device communicates with the source cell, the terminal device receives configuration information of a neighboring cell from the source cell, where the neighboring cell includes the second target cell. For another example, in a process in which the terminal device communicates with the CU, the terminal device receives configuration information of a plurality of cells from the CU, and the plurality of cells include the second target cell.

A fourth aspect of this application provides a communication method. The method is performed by a distributed unit (distributed unit, DU), the method is performed by a part of components (for example, a processor, a chip, or a chip system) in the DU, or the method may be implemented by a logical module or software that can implement all or some functions of the DU. In the fourth aspect and the possible implementations of the fourth aspect, an example in which the communication method is performed by the DU is used for description. In the method, the DU sends a first message to a CU, where the first message is used to request to hand over a terminal device to a first target cell in a first manner, and the first manner includes an L1-based cell handover manner and/or an L2-based cell handover manner. The DU receives first indication information from the CU, where the first indication information indicates whether the terminal device is allowed to be handed over to the first target cell. When the first indication information indicates that the terminal device is allowed to be handed over to the first target cell, the DU sends a first handover message to the terminal device, where the first handover message indicates to hand over the terminal device to the first target cell in the first manner.

Based on the foregoing technical solution, the DU receives the first indication information from the CU, to indicate whether the terminal device is allowed to be handed over to the first target cell, and when the first indication information indicates that the terminal device is allowed to be handed over to the first target cell, the DU sends the first handover message to the terminal device. In other words, after the DU makes a cell handover decision result based on the first manner, the DU determines, in a CU decision manner, whether to initiate a cell handover process based on the first manner. In addition, when the CU indicates that the cell handover process of the terminal device is allowed to be initiated based on the first manner, the CU does not initiate the cell handover process of the terminal device based on a second manner, that is, the DU initiates the cell handover process based on the first handover message. In this way, compared with a case in which the CU and the DU each send a cell handover command to the terminal device, the CU decision manner can enable the DU to determine whether to initiate the cell handover process of the terminal device based on the first manner, to avoid a cell handover failure caused by an unclear handover behavior of the terminal device, and improve reliability of the cell handover process.

In a possible implementation of the fourth aspect, the first target cell corresponds to the DU. After the DU sends the first handover message based on the first indication information, the method further includes: After the DU determines that the terminal device is successfully handed over to the first target cell, the DU sends at least one of the following: information indicating that the terminal device successfully completes cell handover in the first manner, or information indicating that the terminal device is successfully handed over to the first target cell in the first manner.

Based on the foregoing technical solution, after the DU determines that a cell handover manner of the terminal device is the first manner, the DU may perform, based on the first handover message, a cell handover process corresponding to the first manner with the terminal device, and indicate, by using the at least one of the foregoing information, to the CU that the DU determines that the cell handover manner of the terminal device is the first manner, so that the CU determines, based on the at least one of the foregoing information, that the terminal device is successfully handed over to the first target cell in the first manner.

In a possible implementation of the fourth aspect, the first target cell corresponds to the DU. After the DU sends the first handover message based on the first indication information, the method further includes: After the DU determines that the terminal device fails to be handed over to the first target cell, the DU sends at least one of the following: information indicating that the terminal device fails to be handed over in the first manner, or information indicating that the terminal device fails to be handed over to the first target cell in the first manner.

Based on the foregoing technical solution, after the DU determines that the cell handover manner of the terminal device is the first manner, the DU may perform, based on the first handover message, the cell handover process corresponding to the first manner with the terminal device, and indicate, by using the at least one of the foregoing information, to the CU that the DU determines that the cell handover manner of the terminal device is the first manner, so that the CU determines, based on the at least one of the foregoing information, that the terminal device fails to be handed over to the first target cell.

In a possible implementation of the fourth aspect, when the first indication information indicates that the terminal device is not allowed to be handed over to the first target cell, the method further includes: The DU receives a second handover message from the CU, where the second handover message indicates to hand over the terminal device to a second target cell in the second manner, and the second manner includes an L3-based cell handover manner. The DU sends the third handover message, where the third handover message indicates to hand over the terminal device to the second target cell in the second manner.

Based on the foregoing technical solution, when the first indication information indicates that the terminal device is not allowed to be handed over to the first target cell, the DU further receives, from the CU, the second handover message indicating to hand over the terminal device to the second target cell in the second manner, and the DU sends, to the terminal device, the third handover message indicating to hand over the terminal device to the second target cell in the second manner. In other words, after the DU makes the cell handover decision result in the first manner, the DU determines, in the CU decision manner, whether to initiate the cell handover process based on the first manner. In addition, when the CU indicates that the cell handover process of the terminal device is not allowed to be initiated based on the first manner, the CU does not initiate the cell handover process of the terminal device based on the first manner, and initiates the cell handover process of the terminal device based on the second manner after receiving the second handover message from the CU.

In a possible implementation of the fourth aspect, the third handover message includes configuration information of the second target cell; or delta configuration information of the second target cell and second indication information, where the second indication information indicates the terminal device to perform delta configuration on the delta configuration information of the second target cell based on configuration information of the source cell.

Based on the foregoing technical solution, the third handover message sent by the DU to the terminal device may include the configuration information related to the second target cell. Therefore, after the terminal device receives the third handover message, the terminal device is handed over to the second target cell based on the configuration information related to the second target cell.

Optionally, when the third handover message does not include the configuration information related to the second target cell, the terminal device may alternatively obtain the configuration information related to the second target cell in another manner. For example, in a process in which the terminal device communicates with the source cell, the terminal device receives configuration information of a neighboring cell from the source cell, where the neighboring cell includes the second target cell. For another example, in a process in which the terminal device communicates with the CU, the terminal device receives configuration information of a plurality of cells from the CU, and the plurality of cells include the second target cell.

In a possible implementation of the fourth aspect, the first indication information is carried in a second message, and the second message indicates that the first message is successfully received.

Based on the foregoing technical solution, the first indication information sent by the CU may be carried in the second message indicating that the first message is successfully received, to reduce overheads.

Optionally, the first indication information may alternatively be carried in another message different from the second message.

A fifth aspect of this application provides a communication method. The method is performed by a central unit (central unit, CU), the method is performed by a part of components (for example, a processor, a chip, or a chip system) in the CU, or the method may be implemented by a logical module or software that can implement all or some functions of the CU. In the second aspect and the possible implementations of the second aspect, an example in which the communication method is performed by the CU is used for description. In the method, the CU receives a first message, where the first message is used to request to hand over a terminal device to a first target cell in a first manner, and the first manner includes an L1-based cell handover manner and/or an L2-based cell handover manner. The CU sends first indication information, where the first indication information indicates whether the terminal device is allowed to be handed over to the first target cell.

Based on the foregoing technical solution, the first indication information sent by the CU to a DU indicates whether the terminal device is allowed to be handed over to the first target cell, so that the DU sends a first handover message to the terminal device when the first indication information indicates that the terminal device is allowed to be handed over to the first target cell. In other words, after the DU makes a cell handover decision result based on the first manner, the DU determines, in a CU decision manner, whether to initiate a cell handover process based on the first manner. In addition, when the CU indicates that the cell handover process of the terminal device is allowed to be initiated based on the first manner, the CU does not initiate the cell handover process of the terminal device based on a second manner, that is, the DU initiates the cell handover process based on the first handover message. In this way, compared with a case in which the CU and the DU each send a cell handover command to the terminal device, the CU decision manner can enable the DU to determine whether to initiate the cell handover process of the terminal device based on the first manner, to avoid a cell handover failure caused by an unclear handover behavior of the terminal device, and improve reliability of the cell handover process.

In a possible implementation of the fifth aspect, the method further includes: The CU receives at least one of the following: information indicating that the terminal device successfully completes cell handover in the first manner, or information indicating that the terminal device is successfully handed over to the first target cell in the first manner.

Based on the foregoing technical solution, after the DU determines that a cell handover manner of the terminal device is the first manner, the DU may perform, based on the first handover message, a cell handover process corresponding to the first manner with the terminal device, and indicate, by using the at least one of the foregoing information, to the CU that the DU determines that the cell handover manner of the terminal device is the first manner, so that the CU determines, based on the at least one of the foregoing information, that the terminal device is successfully handed over to the first target cell in the first manner.

In a possible implementation of the fifth aspect, the method further includes: The CU receives at least one of the following: information indicating that the terminal device fails to be handed over in the first manner, or information indicating that the terminal device fails to be handed over to the first target cell in the first manner.

Based on the foregoing technical solution, after the DU determines that the cell handover manner of the terminal device is the first manner, the DU may perform, based on the first handover message, the cell handover process corresponding to the first manner with the terminal device, and indicate, by using the at least one of the foregoing information, to the CU that the DU determines that the cell handover manner of the terminal device is the first manner, so that the CU determines, based on the at least one of the foregoing information, that the terminal device fails to be handed over to the first target cell.

In a possible implementation of the fifth aspect, when the first indication information indicates that the terminal device is not allowed to be handed over to the first target cell, the method further includes: The CU sends a second handover message to the DU, where the second handover message indicates to hand over the terminal device to a second target cell in the second manner, and the second manner includes an L3-based cell handover manner.

Based on the foregoing technical solution, when the first indication information indicates that the terminal device is not allowed to be handed over to the first target cell, the CU further sends, to the DU, the second handover message indicating to hand over the terminal device to the second target cell in the second manner, and the DU sends, to the terminal device, a third handover message indicating to hand over the terminal device to the second target cell in the second manner. In other words, after the DU makes the cell handover decision result in the first manner, the DU determines, in the CU decision manner, whether to initiate the cell handover process based on the first manner. In addition, when the CU indicates that the cell handover process of the terminal device is not allowed to be initiated based on the first manner, the CU does not initiate the cell handover process of the terminal device based on the first manner, and initiates the cell handover process of the terminal device based on the second manner after receiving the second handover message from the CU.

In a possible implementation of the fifth aspect, the first indication information is carried in a second message, and the second message indicates that the first message is successfully received.

Based on the foregoing technical solution, the first indication information sent by the CU may be carried in the second message indicating that the first message is successfully received, to reduce overheads.

Optionally, the first indication information may alternatively be carried in another message different from the second message.

A sixth aspect of this application provides a communication method. The method is performed by a terminal device, the method is performed by a part of components (for example, a processor, a chip, or a chip system) in the terminal device, or the method may be implemented by a logical module or software that can implement all or some functions of the terminal device. In the sixth aspect and the possible implementations of the sixth aspect, an example in which the communication method is performed by the terminal device is used for description. In the method, the terminal device receives a first handover message, where the first handover message indicates to hand over the terminal device from a source cell to a first target cell in a first manner, and the first manner includes an L1-based cell handover manner and/or an L2-based cell handover manner. The terminal device receives a third handover message, where the third handover message indicates to hand over the terminal device from the source cell to a second target cell in a second manner. The terminal device determines that a cell handover manner is the first manner or the second manner.

Based on the foregoing technical solution, when a network device initiates an L1 and/or L2 cell handover process to the terminal device based on the first handover message, and the network device initiates an L3 cell handover process to the terminal device based on the third handover message, the terminal device determines that the cell handover manner is either of the first manner and the second manner, so that the terminal device can subsequently initiate the cell handover process based on the either of the first manner and the second manner. In other words, when a DU makes a cell handover decision result based on the first manner and a CU makes a cell handover decision result based on the second manner, the terminal device initiates the cell handover process based on the either of the first manner and the second manner in a terminal device decision manner, to avoid a cell handover failure caused by an unclear handover behavior of the terminal device, and improve reliability of the cell handover process.

In a possible implementation of the sixth aspect, that the terminal device determines that a cell handover manner is the first manner or the second manner includes: When the terminal device determines that a cell in which the terminal device is currently located is different from a source cell corresponding to a later received handover message, the terminal device determines that the cell handover manner is a cell handover manner corresponding to an earlier received handover message; or when the terminal device determines that a cell in which the terminal device is currently located is the same as a source cell corresponding to a later received handover message, the terminal device determines that the cell handover manner is a cell handover manner corresponding to the later received handover message.

It should be understood that the terminal device may separately receive the first handover message and the third handover message. Therefore, in this implementation, the earlier received handover message is the first handover message, and the later received handover message is the third handover message; or in this implementation, the earlier received handover message is the third handover message, and the later received handover message is the first handover message.

Based on the foregoing technical solution, after the terminal device receives the first handover message and the third handover message, the terminal device may determine whether the cell in which the terminal device is currently located is the same as the source cell corresponding to the later received handover message. In addition, when the cell in which the terminal device is currently located is different from the source cell corresponding to the later received handover message, the terminal device determines that the terminal device has been handed over to a target cell corresponding to the earlier received handover message, that is, the terminal device determines that the cell handover manner is the cell handover manner corresponding to the earlier received handover message. When the cell in which the terminal device is currently located is the same as the source cell corresponding to the later received handover message, the terminal device is not handed over to a target cell corresponding to the earlier received handover message, that is, the terminal device determines that the cell handover manner is the cell handover manner corresponding to the later received handover message.

In a possible implementation of the sixth aspect, the terminal device determines that the cell handover manner is the second manner, and the method further includes: The terminal device is handed over from the source cell to the second target cell in the second manner.

Based on the foregoing technical solution, the terminal device always considers that the cell handover manner corresponding to the second manner needs to be performed. To be specific, regardless of whether the first handover message is received, after receiving the third handover message, the terminal device needs to be handed over from the source cell to the second target cell In the second manner.

In a possible implementation of the sixth aspect, after the terminal device receives the first handover message, the method further includes: The terminal device starts a timer. The terminal device discards the third handover message when the terminal device receives the third handover message before the timer expires; or the terminal device is handed over to the second target cell in the second manner when the terminal device receives the third handover message after the timer expires.

Based on the foregoing technical solution, when the terminal device first receives the first handover message and then receives the third handover message, the terminal device may further start the timer after receiving the first handover message, and when receiving the third handover message before the timer expires, to avoid a failure of the cell handover process corresponding to the first manner, the terminal device determines that cell handover does not need to be performed based on the third handover message, that is, the terminal device determines to discard the third handover message. When receiving the third handover message after the timer expires, the terminal device determines that cell handover needs to be performed based on the third handover message, that is, the terminal device is handed over to the second target cell in the second manner.

**In** a possible implementation of the sixth aspect, that the terminal device determines that a cell handover manner is the first manner or the second manner includes: After the terminal device is successfully handed over to the first target cell in the first manner, the terminal device discards the third handover message; or after the terminal device fails to be handed over to the first target cell in the first manner, the terminal device is handed over to the second target cell in the second manner.

Based on the foregoing technical solution, when the first handover message and the third handover message are carried in a same downlink data packet, the terminal device preferentially performs the cell handover process corresponding to the first manner, and after the terminal device is successfully handed over to the first target cell in the first manner, the terminal device discards the third handover message; or after the terminal device fails to be handed over to the first target cell in the first manner, the terminal device is handed over to the second target cell in the second manner, to improve a cell handover success rate.

**In** a possible implementation of the sixth aspect, that the terminal device determines that a cell handover manner is the first manner or the second manner includes: After the terminal device is successfully handed over to the second target cell in the second manner, the terminal device discards the first handover message; or after the terminal device fails to be handed over to the second target cell in the second manner, the terminal device is handed over to the first target cell in the first manner.

Based on the foregoing technical solution, when the first handover message and the third handover message are carried in a same downlink data packet, the terminal device preferentially performs the cell handover process corresponding to the second manner, and after the terminal device is successfully handed over to the second target cell in the second manner, the terminal device discards the first handover message; or after the terminal device fails to be handed over to the second target cell in the second manner, the terminal device is handed over to the first target cell in the first manner, to improve a cell handover success rate.

In a possible implementation of the sixth aspect, that the terminal device determines that a cell handover manner is the first manner or the second manner includes: The terminal device is handed over to the second target cell in the second manner.

Based on the foregoing technical solution, when the first handover message and the third handover message are carried in a same downlink data packet, in a process of parsing the downlink data packet, the terminal device first parses the first handover message corresponding to an underlying protocol stack and then obtains, through parsing, the third handover message corresponding to a higher layer protocol stack. Therefore, the terminal device first performs cell handover based on the first handover message, and after obtaining, through parsing, the third handover message, suspends the handover process corresponding to the first manner, and performs the handover process corresponding to the second manner, so that the terminal device is handed over to the second target cell in the second manner.

In a possible implementation of the sixth aspect, the method further includes: The terminal device sends a first measurement result, where the first measurement result is an L1 measurement result or an L3 measurement result, the L1 measurement result is a decision basis of the first manner, and the L3 measurement result is a decision basis of the second manner.

It should be understood that this implementation may be independently implemented without depending on the method shown in the sixth aspect.

Based on the foregoing technical solution, the network device makes a cell handover decision based on the measurement result reported by the terminal device, that is, L1 and/or L2 handover is obtained based on the L1 measurement result, and L3 handover is obtained based on the L3 measurement result. To prevent the network device from continuously sending the first handover message (that is, an L1 and/or L2 handover command) and the third handover message (that is, an L3 handover command) within short time, the terminal device may report only one of the L1 measurement result and the L3 measurement result, to avoid a cell handover failure caused by an unclear handover behavior of the terminal device due to a plurality of handover messages delivered by the network device, and improve reliability of the cell handover process.

In a possible implementation of the sixth aspect, that the terminal device sends a first measurement result includes: The terminal device sends the L1 measurement result or the L3 measurement result when the terminal device determines that the terminal device is in a preset area.

Optionally, the preset area is a signal coverage area of one or more cells corresponding to a preset cell identifier, or the preset area is a signal coverage area of one or more SSBs corresponding to a preset synchronization signal block (synchronization signal/physical broadcast channel block, SS/PBCH block, SS/PBCH block, or SSB) index. This is not limited herein.

Based on the foregoing technical solution, when communication is performed in the preset area, the terminal device sends one of the L1 measurement result and the L3 measurement result, to avoid the cell handover failure caused by the unclear handover behavior of the terminal device due to the plurality of handover messages delivered by the network device, and improve reliability of the cell handover process.

A seventh aspect of this application provides a communication apparatus. The apparatus may implement the method in any one of the possible implementations in the first aspect to the sixth aspect. The apparatus includes a corresponding unit or module configured to perform the foregoing method. The unit or module included in the apparatus can be implemented by software and/or hardware.

In a possible design, the communication apparatus includes a processing unit and a communication unit. The communication unit may include a receiving unit and/or a sending unit. The communication unit may be configured to receive and send a signal, to implement communication between the communication apparatus and another apparatus. The processing unit may be configured to perform some internal operations of the communication apparatus. Functions performed by the processing unit and the communication unit may correspond to an operation in any one of the possible implementations in the first aspect to the sixth aspect.

In a possible design, the communication apparatus includes a processor, and may further include a transceiver. The transceiver is configured to receive and send a signal, and the processor completes the method in any one of the possible implementations in the first aspect to the sixth aspect through the transceiver. The communication apparatus may further include one or more memories. The memory may be configured to be coupled to the processor, and the memory may store a computer program or instructions for implementing the function in the first aspect. The processor may execute the computer program or the instructions stored in the memory. When the computer program or the instructions are executed, the communication apparatus is enabled to implement the method in any one of the possible implementations in the first aspect to the sixth aspect.

In a possible design, the communication apparatus includes a processor, and the processor may be configured to be coupled to a memory. The memory may store a computer program or instructions for implementing the function in any one of the possible implementations in the first aspect to the sixth aspect. The processor may execute the computer program or the instructions stored in the memory. When the computer program or the instructions are executed, the communication apparatus is enabled to implement the method in any one of the possible implementations in the first aspect to the sixth aspect.

In another possible design, the communication apparatus includes a processor and an interface circuit. The processor is configured to communicate with another apparatus through the interface circuit, and perform the method in any one of the possible implementations in the first aspect to the sixth aspect.

An eighth aspect of embodiments of this application provides a computer-readable storage medium storing one or more computer-executable instructions. When the computer-executable instructions are executed by a processor, the processor performs the method in any one of the first aspect or the possible implementations of the first aspect, or the processor performs the method in any one of the second aspect or the possible implementations of the second aspect, or the processor performs the method in any one of the third aspect or the possible implementations of the third aspect, or the processor performs the method in any one of the fourth aspect or the possible implementations of the fourth aspect, or the processor performs the method in any one of the fifth aspect or the possible implementations of the fifth aspect, or the processor performs the method in any one of the sixth aspect or the possible implementations of the sixth aspect.

A ninth aspect of embodiments of this application provides a computer program product (or referred to as a computer program) storing one or more computers. The computer program product includes a program or instructions. When the program or the instructions in the computer program product are executed by a processor, the processor performs the method in any one of the first aspect or the possible implementations of the first aspect, or the processor performs the method in any one of the second aspect or the possible implementations of the second aspect, or the processor performs the method in any one of the third aspect or the possible implementations of the third aspect, or the processor performs the method in any one of the fourth aspect or the possible implementations of the fourth aspect, or the processor performs the method in any one of the fifth aspect or the possible implementations of the fifth aspect, or the processor performs the method in any one of the sixth aspect or the possible implementations of the sixth aspect.

A tenth aspect of embodiments of this application provides a chip system. The chip system includes at least one processor, configured to support a communication apparatus in implementing the function in any one of the first aspect or the possible implementations of the first aspect; or configured to support the communication apparatus in implementing the function in any one of the second aspect or the possible implementations of the second aspect; or configured to support the communication apparatus in implementing the function in any one of the third aspect or the possible implementations of the third aspect; or configured to support the communication apparatus in implementing the function in any one of the fourth aspect or the possible implementations of the fourth aspect; or configured to support the communication apparatus in implementing the function in any one of the fifth aspect or the possible implementations of the fifth aspect; or configured to support the communication apparatus in implementing the function in any one of the sixth aspect or the possible implementations of the sixth aspect.

In a possible design, the chip system may further include a memory. The memory is configured to store program instructions and data that are necessary for the first communication apparatus. The chip system may include a chip, or may include a chip and another discrete component. Optionally, the chip system further includes an interface circuit, and the interface circuit provides program instructions and/or data for the at least one processor.

An eleventh aspect of embodiments of this application provides a communication system. The communication system includes the DU in any one of the first aspect and the implementations of the first aspect, the CU in any one of the second aspect and the implementations of the second aspect, and the terminal device in any one of the third aspect and the implementations of the third aspect. Alternatively, the communication system includes the DU in any one of the fourth aspect and the implementations of the fourth aspect, and the CU in any one of the fifth aspect and the implementations of the fifth aspect. Alternatively, the communication system includes the terminal device in any one of the sixth aspect and the implementations of the sixth aspect.

### BRIEF DESCRIPTION OF DRAWINGS

FIG. 1 is a diagram of a communication system according to this application;
FIG. 2 is another diagram of a communication system according to this application;
FIG. 3a is a diagram of a cell handover method according to this application;
FIG. 3b is another diagram of a cell handover method according to this application;
FIG. 3c is another diagram of a cell handover method according to this application;
FIG. 4 is a diagram of a communication method according to this application;
FIG. 5a is another diagram of a communication method according to this application;
FIG. 5b is another diagram of a communication method according to this application;
FIG. 5c is another diagram of a communication method according to this application;
FIG. 5d is another diagram of a communication method according to this application;
FIG. 5e is another diagram of a communication method according to this application;
FIG. 6 is another diagram of a communication method according to this application;
FIG. 7 is another diagram of a communication method according to this application;
FIG. 8a is another diagram of a communication method according to this application;
FIG. 8b is another diagram of a communication method according to this application;
FIG. 9 is another diagram of a communication apparatus according to this application;
FIG. 10 is another diagram of a communication apparatus according to this application;
FIG. 11 is another diagram of a communication apparatus according to this application;
FIG. 12 is another diagram of a communication apparatus according to this application; and
FIG. 13 is another diagram of a communication apparatus according to this application.

### DESCRIPTION OF EMBODIMENTS

The following describes the technical solutions in embodiments of this application with reference to the accompanying drawings in embodiments of this application. All other embodiments obtained by a person of ordinary skill in the art based on embodiments of this application without creative efforts shall fall within the protection scope of this application.

First, some terms in embodiments of this application are explained and described, to facilitate understanding of a person skilled in the art.
(1) Terminal device: The terminal device in embodiments of this application may also be referred to as a terminal, user equipment (user equipment, UE), a mobile station, a mobile terminal, or the like. The terminal device may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, a wearable device, or the like. A specific technology and a specific device form that are used for the terminal device are not limited in embodiments of this application. In embodiments of this application, an apparatus configured to implement a function of the terminal device may be a terminal device, or may be an apparatus, for example, a chip system, that can support the terminal device in implementing the function. The apparatus may be installed in the terminal device, or may be used together with the terminal device. In embodiments of this application, the chip system may include a chip, or may include a chip and another discrete component. The technical solutions provided in embodiments of this application are described by using an example in which the apparatus configured to implement the function of the terminal device is the terminal device.

In addition, the terminal device may alternatively be a terminal device in a communication system (for example, a 6th generation (6th generation, 6G) communication system) evolved after a 5th generation (5th generation, 5G) communication system, a terminal device in a future evolved public land mobile network (public land mobile network, PLMN), or the like.

(2) Network device: The network device may be a device in a wireless network. For example, the network device may be an access network (radio access network, RAN) node (or device) through which the terminal device accesses the wireless network, and may also be referred to as a base station. Currently, some examples of the RAN device are a base station gNB (gNodeB) in the 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB, or a home NodeB, HNB), a baseband unit (baseband unit, BBU), a wireless fidelity (wireless fidelity, Wi-Fi) access point AP, and the like. In addition, in a network structure, the network device may include a central unit (central unit, CU) node, a distributed unit (distributed unit, DU) node, or a RAN device including a CU node and a DU node.

(3) In embodiments of this application, "a plurality of" means two or more than two. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

In this application, unless otherwise specified, for same or similar parts in embodiments, refer to each other. In embodiments of this application and the methods/designs/implementations in embodiments, unless otherwise specified or a logical conflict occurs, terms and/or descriptions are consistent and may be mutually referenced between different embodiments and between the methods/designs/implementations in embodiments, and technical features in the different embodiments and the methods/designs/implementations in embodiments may be combined to form a new embodiment, method, or implementation based on an internal logical relationship thereof. The following implementations of this application are not intended to limit the protection scope of this application.

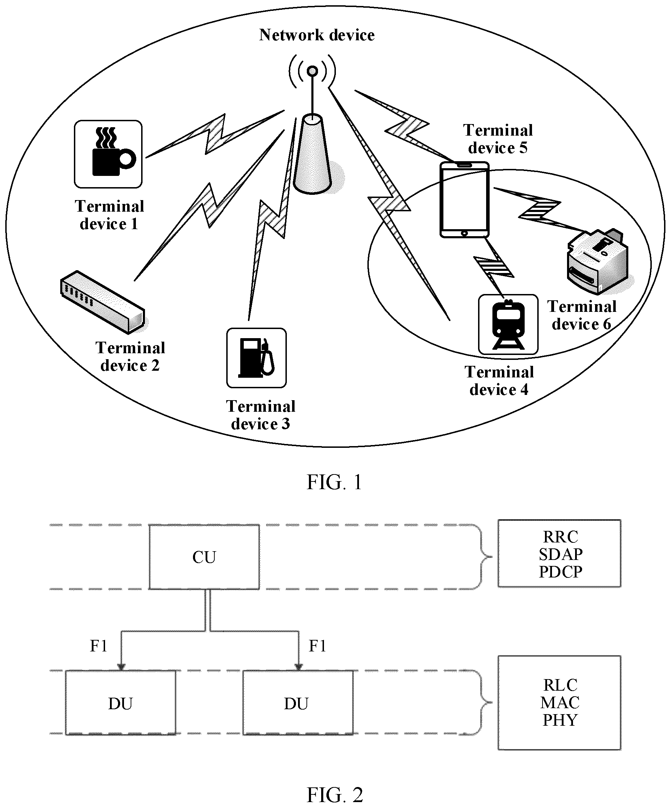

FIG. 1 is a diagram of a communication system according to this application. FIG. 1 shows an example of a network device 101 and six terminal devices. The six terminal devices are respectively a terminal device 1, a terminal device 2, a terminal device 3, a terminal device 4, a terminal device 5, a terminal device 6, and the like. In the example shown in FIG. 1, an example in which the terminal device 1 is a smart teacup, the terminal device 2 is a smart air conditioner, the terminal device 3 is a smart fuel dispenser, the terminal device 4 is a transportation means, the terminal device 5 is a mobile phone, and the terminal device 6 is a printer is used for description.

As shown in FIG. 1, an indication information (or configuration information) sending entity may be the network device. Indication information (or configuration information) receiving entities may be the terminal device 1 to the terminal device 6. In this case, the network device and the terminal device 1 to the terminal device 6 form a communication system. In the communication system, the terminal device 1 to the terminal device 6 may send uplink data to the network device, and the network device needs to receive the uplink data sent by the terminal device 1 to the terminal device 6. In addition, the network device may send indication information (or configuration information) to the terminal device 1 to the terminal device 6.

For example, in FIG. 1, the UE 4 to the UE 6 may also form a communication system. The terminal device 5 serves as a network device, that is, an indication information (or configuration information) sending entity. The terminal device 4 and the terminal device 6 serve as terminal devices, that is, indication information (or configuration information) receiving entities. For example, in an internet of vehicles system, the terminal device 5 separately sends indication information (or configuration information) to the terminal device 4 and the terminal device 6, and receives uplink data sent by the terminal device 4 and the terminal device 6. Correspondingly, the terminal device 4 and the terminal device 6 receive the indication information (or the configuration information) sent by the terminal device 5, and send the uplink data to the terminal device 5.

It should be understood that this application may be applied to a long term evolution (long term evolution, LTE) system, a new radio (new radio, NR) system, or a communication system (for example, 6G) evolved after 5G. The communication system includes a network device and a terminal device.

The communication system shown in FIG. 1 is used as an example. Due to movement of the terminal device, fluctuation of a network signal, or another reason, the network device may hand over the terminal device from one cell to another cell, to maintain continuity of a communication service of the terminal device. This handover process may be referred to as cell handover. To be specific, in a cell handover process, the network device hands over the terminal device from a source cell to a target cell.

In a possible implementation, the communication system shown in FIG. 1 may be 5G. A beamforming technology is widely applied in 5G. A transmitting end uses beamforming to guide each signal to an optimal path of a terminal receiver, to improve signal strength, avoid signal interference, and improve communication quality. When the terminal device moves, a beam direction with good signal quality needs to be selected for communication by using a beam management process. In a high-frequency deployment scenario, a signal strength attenuation degree is greater, and communication quality needs to be improved by using the beamforming technology. This process may be referred to as beam switching and/or cell handover.

FIG. 2 shows a CU-DU split architecture. In FIG. 2, a network device is logically split into one CU and one or more DUs. Each DU is connected to the CU through an F1 logical interface. In addition, operations related to a radio link control (radio link control, RLC) layer, a media access control (media access control, MAC) layer, and a physical (physical, PHY) layer are processed by the DU, and operations related to a radio resource control (radio resource control, RRC) layer, a service data adaptation protocol (service data adaptation protocol, SDAP) layer, and a packet data convergence protocol (packet data convergence protocol, PDCP) layer are processed by the CU.

The CU-DU split architecture can also be compatible with a cell handover process.

In an implementation, the CU may serve as a cell handover decision party. For example, the CU obtains a measurement report sent by a terminal device, where the measurement report includes measurement information of a source cell and measurement information of one or more neighboring cells, so that the CU serves as the cell handover decision party. To be specific, the CU may determine, based on the measurement report, whether the terminal device needs to perform cell handover, and when the CU determines that the terminal device needs to perform cell handover, the CU sends a cell handover command to the terminal device. This implementation process may also be referred to as L3 handover.

The L3 handover means that a handover-related operation is mainly performed at the RRC layer. For example, the measurement report sent by the terminal device is a result obtained based on physical layer measurement, L3 filtering is further performed to obtain an L3 measurement result, and the L3 measurement result is sent to the network device by using an RRC message (L3 message), so that the RRC layer of the network device reads the L3 measurement result. In the CU-DU split architecture, the RRC layer of the network device is located in the CU. To be specific, the CU receives the L3 measurement result, and the CU determines, based on the L3 measurement result, whether cell handover needs to be performed. When cell handover needs to be performed, the CU sends a handover command to the terminal device by using an RRC message.

Optionally, the L3 handover is applicable to: (1) inter-CU cell handover (that is, a source cell and a target cell belong to different CUs); (2) inter-DU cell handover in a same CU (that is, a source cell and a target cell belong to different DUs in a same CU); and (3) intra-DU cell handover (that is, a source cell and a target cell belong to a same DU).

It may be understood that, in this application, that a cell (including a source cell or a target cell) belongs to a network device (including a CU or a DU) may be described as that the cell is managed by the network device, or may be described as that the network device provides a service for the cell, or may be another description. This is not limited herein. Correspondingly, that a cell (including a source cell or a target cell) does not belong to a network device (including a CU or a DU) may be described as that the cell is not managed by the network device, or may be described as that a network device other than the network device provides a service for the cell, or may be another description. This is not limited herein.

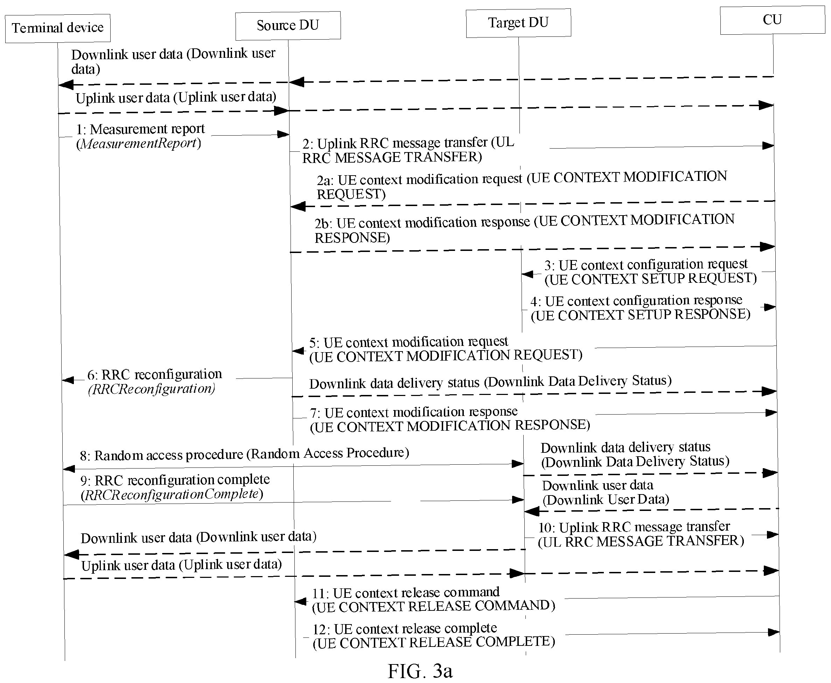

The following describes a procedure of inter-DU cell handover in a same CU by using an implementation example shown in FIG. 3a. The procedure includes the following steps.

Step 1: A terminal device sends a measurement report (MeasurementReport) to a source DU.

Optionally, before step 1, after downlink user data (Downlink user data) from a CU is received by the source DU, the source DU sends the downlink user data to the terminal device. Correspondingly, after uplink user data (Uplink user data) from the terminal device is received by the source DU, the source DU sends the uplink user data to the CU.

Step 2: The source DU performs an uplink RRC message transfer (UL RRC MESSAGE TRANSFER) message to the CU, to carry the measurement report received by the source DU in step 1.

Optionally, after step 2, step 2a and step 2b may be further performed between the CU and the source DU.

In step 2a, the CU sends a UE context modification request (UE CONTEXT MODIFICATION REQUEST) message to the source DU, where the UE context modification request message is used to request configuration information of the terminal device. In step 2b, the source DU sends a UE context modification response (UE CONTEXT MODIFICATION RESPONSE) message to the CU, where the UE context modification response message carries the configuration information of the terminal device.

Step 3: The CU sends a UE context configuration request (UE CONTEXT SETUP REQUEST) message to a target DU.

The CU determines, based on the measurement report received in step 2, that the terminal device needs to perform cell handover and is handed over from a source cell in the source DU to a target cell in the target DU. In step 3, the CU indicates a decision result of the CU to the target DU by using the UE context configuration request message.

Step 4: The target DU sends a UE context configuration response (UE CONTEXT SETUP RESPONSE) message to the CU.

Step 5: The CU sends a UE context modification request (UE CONTEXT MODIFICATION REQUEST) message to the source DU.

Step 6: The source DU sends an RRC reconfiguration (RRCReconfiguration) message to the terminal device.

Optionally, the RRC reconfiguration message includes configuration information that is provided by the target cell in the target DU for the terminal device.

Optionally, after step 6, the source DU sends a downlink data delivery status (Downlink Data Delivery Status) message to the CU.

Step 7: The source DU sends a UE context modification response (UE CONTEXT MODIFICATION RESPONSE) message to the CU.

Step 8: The terminal device initiates a random access procedure (Random Access Procedure) to the target DU.

Optionally, after the terminal device successfully accesses the target cell in the source DU in step 8, the target DU sends a downlink data delivery status (Downlink Data Delivery Status) message to the CU.

Optionally, after the CU receives the downlink data delivery status (Downlink Data Delivery Status) message, the CU sends downlink user data (Downlink User Data) to the target DU.

Step 9: After the terminal device successfully accesses the target cell in the source DU in step 8, the terminal device sends RRC reconfiguration complete (RRCReconfigurationComplete) information to the target DU.

Optionally, after step 9, after the downlink user data (Downlink user data) from the CU is received by the target DU, the target DU sends the downlink user data to the terminal device. Correspondingly, after uplink user data (Uplink user data) from the terminal device is received by the target DU, the target DU sends the uplink user data to the CU.

Step 10: The target DU sends an uplink RRC message transfer (UL RRC MESSAGE TRANSFER) message to the CU.

Step 11: After the CU receives the uplink RRC message transfer (UL RRC MESSAGE TRANSFER) message in step 10, the CU sends a UE context release command (UE CONTEXT RELEASE Command) message to the source DU in step 11.

Step 12: After the source DU receives the UE context release command (UE CONTEXT RELEASE Command) message in step 11, the source DU sends a UE context release complete (UE CONTEXT RELEASE COMPLETE) message to the CU in step 12.

Based on the implementation process shown in FIG. 3a, the terminal device may implement cell handover based on exchange of L3 messages (including the RRC reconfiguration message, the RRC reconfiguration complete message, and the like).

In another implementation, the DU may serve as a cell handover decision party. For example, the DU obtains a measurement report sent by a terminal device, where the measurement report includes measurement information of a source cell and measurement information of one or more neighboring cells, so that the DU serves as the cell handover decision party. To be specific, the DU may determine, based on the measurement report, whether the terminal device needs to perform cell handover, and when the DU determines that the terminal device needs to perform cell handover, the DU sends a cell handover command to the terminal device. This implementation process may also be referred to as L1 and/or L2 handover.

L1 means a layer 1 (layer 1, L1), where the layer 1 may be referred to as a physical (physical, PHY) layer; and L2 means a layer 2 (layer 2, L2), where the layer 2 includes a media access control (media access control, MAC) layer.

Optionally, L2 further includes a radio link control (radio link control, RLC) layer, a packet data convergence protocol (packet data convergence protocol, PDCP) layer, and a service data adaptation protocol (service data adaptation protocol, SDAP) layer.

Generally, in an L1 and/or L2 handover process, L2 mainly means the MAC layer. The L1 and/or L2 handover means that a handover-related operation is mainly performed at the physical layer and the MAC layer. For example, the terminal device sends an L1 measurement result to the network device by using physical layer control signaling (for example, physical uplink control channel (physical uplink control channel, PUCCH) signaling), and the physical layer of the network device reads the L1 measurement result, and sends a handover decision made based on the measurement result to the terminal device by using L1 and/or L2 signaling. The L1 and/or L2 signaling may be a message carried on a physical downlink control channel (physical downlink control channel, PDCCH), or may be a MAC control element (MAC control element, MAC CE) or the like.

Optionally, the L1 and/or L2 handover is applicable to: (1) inter-DU cell handover in a same CU (that is, a source cell and a target cell belong to different DUs in a same CU); and (2) intra-DU cell handover (that is, a source cell and a target cell belong to a same DU).

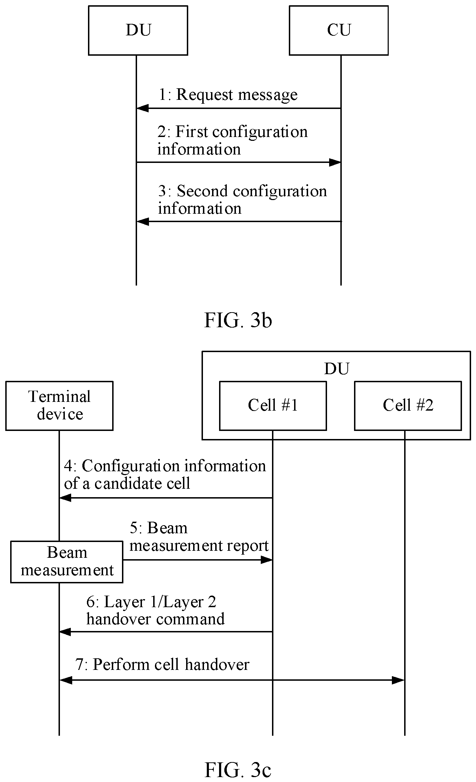

It should be noted that, in the foregoing different scenarios, although specific signaling exchange content varies, implementation processes of the L1 and/or L2 handover are basically consistent. The following describes a procedure of intra-DU cell handover by using implementation processes shown in FIG. 3b and FIG. 3c.

In the following implementation process in FIG. 3b, an interaction process between a DU and a CU is mainly involved, and includes the following steps.

Step 1: The CU sends a request message to the DU, where the request message is used to request configuration information of a candidate cell.

Step 2: The DU sends first configuration information to the CU, where the first configuration information includes configuration information provided by N (where N is an integer greater than or equal to 1) candidate cells for a terminal device, and the N candidate cells are cells that are determined by the DU and on which L1 and/or L2 handover can be performed.

Step 3: The CU sends second configuration information to the DU, where the second configuration information includes configuration information provided by M (where M is an integer less than or equal to N) candidate cells selected by the CU from the N candidate cells for the terminal device.

In the following implementation process in FIG. 3c, an interaction process between a DU and a terminal device is mainly involved, and includes the following steps.

It should be noted that, in the following flowchart in FIG. 3c, to reflect a communication process of the terminal device in different cells, a communication process between the terminal device and the DU device is divided into a communication process between the terminal device and a cell 1 (that is, a source cell, denoted as a cell #1) and a communication process between the terminal device and a cell 2 (that is, a target cell, denoted as a cell #2) for description. It may be understood that, that the terminal device communicates with the cell 1 may be understood as that the terminal device communicates with a network device to which the cell 1 belongs, and a used communication resource is a communication resource of the cell 1.

Step 4: The DU sends configuration information of a candidate cell to the terminal device via the cell #1, where the candidate cell is a part or all of the foregoing M candidate cells.

Step 5: After the terminal device performs beam measurement, the terminal device sends a beam measurement report to the cell #1, where the beam measurement report includes a beam measurement result of the source cell and/or a beam measurement result of at least one candidate cell.

Step 6: The cell #1 sends a layer 1/layer 2 handover command to the terminal device.

Step 7: The terminal device is handed over to the target cell (that is, the cell #2) by using configuration information of the target cell received in step 4.

Optionally, in the foregoing process, the L1 and/or L2 handover process may succeed, and the DU may determine, in at least one of the following manners, that the terminal device is successfully handed over, including:
(a) The terminal device responds to the L1 and/or L2 handover command received in step 6. For example, the DU receives an acknowledgment (acknowledgment, ACK) message, corresponding to the message, sent by the terminal device.
(b) The DU receives an uplink message sent by the terminal device by using a communication resource of the target cell.
(c) After the DU sends a downlink message based on a communication resource of the target cell, the DU receives an ACK message from the terminal device on the communication resource of the target cell, indicating that the downlink message is correctly received.

Optionally, in the foregoing process, the L1 and/or L2 handover process may fail, and the DU may determine, in at least one of the following manners, that the terminal device fails to be handed over, including:
(d) The terminal device responds to the L1 and/or L2 handover command received in step 6. For example, the DU receives a negative acknowledgment (negative acknowledge, NACK) message, corresponding to the message, sent by the terminal device.
(e) The terminal device does not respond to the L1 and/or L2 handover command received in step 6. For example, the DU does not receive a response message (including an ACK message and a NACK message), corresponding to the message, sent by the terminal device.
(f) The DU does not receive an uplink message sent by the terminal device by using a communication resource of the target cell.
(g) After the DU sends a downlink message based on a communication resource of the target cell, the DU does not receive a response message (including an ACK message and a NACK message) for the downlink message from the terminal device on the communication resource of the target cell.

Based on the implementation processes shown in FIG. 3b and FIG. 3c, the terminal device may implement cell handover based on exchange of L1 and/or L2 messages (including the beam measurement report, the L1/L2 handover command, and the like).

It can be learned from the foregoing implementation processes that, in the CU-DU split architecture, the cell handover process may include the L3 handover implementation process and the L1 and/or L2 handover, which are applicable to different scenarios, and the network device may configure the L1 and/or L2 handover and the L3 handover for a same terminal device. For example, when a movement location of the terminal device is suitable for performing intra-DU cell handover, the DU in the network device may deliver an L1 and/or L2 handover command. When a movement location of the terminal device is suitable for performing inter-DU or inter-CU handover, the CU in the network device delivers an L3 handover command.

However, in the CU-DU split architecture, an L1 and/or L2 handover decision is performed by the DU, and an L3 handover decision is performed by the CU. Because decision entities are not a same device, a decision result conflict may occur. For example, a decision result of the DU indicates that the terminal device is handed over from a cell 1 to a cell 2 in an L1 and/or L2-based cell handover manner, and a decision result of the CU indicates that the terminal device is handed over from the cell 1 to a cell 3 in an L3-based cell handover manner. For another example, a decision result of the DU indicates that the terminal device is handed over from a cell 1 to a cell 2 in an L1 and/or L2-based cell handover manner, and a decision result of the CU indicates that the terminal device is handed over from the cell 1 to the cell 2 in an L3-based cell handover manner. The cell 1 is a source cell in which the terminal device is currently located. When a decision result handover conflict occurs, the terminal device receives two different handover commands, and a handover behavior of the terminal device may be unclear. Consequently, cell handover of the terminal device may fail.

Therefore, how to improve reliability of the cell handover process of the terminal device is an urgent technical problem to be resolved. The following describes a plurality of embodiments provided in this application, to resolve the technical problem by using a plurality of different technical means.

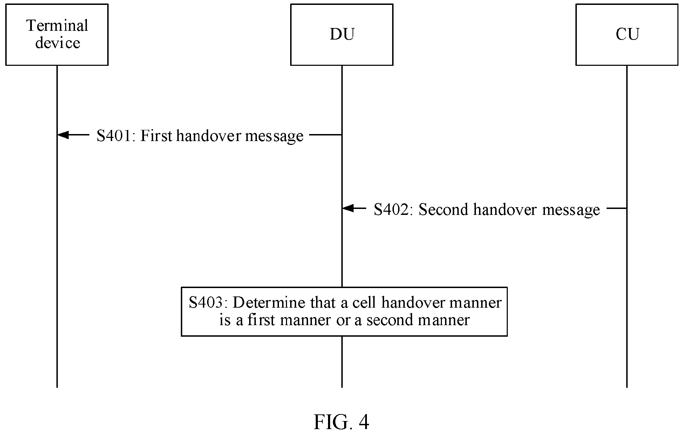

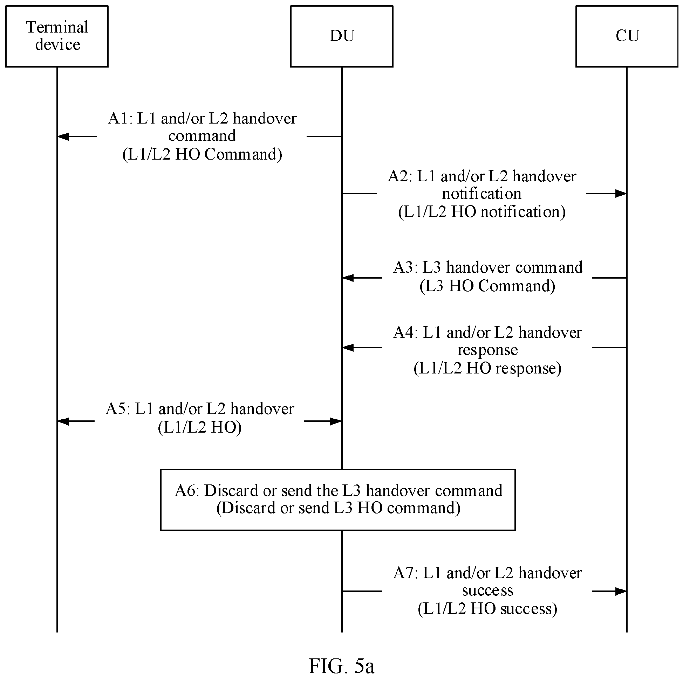

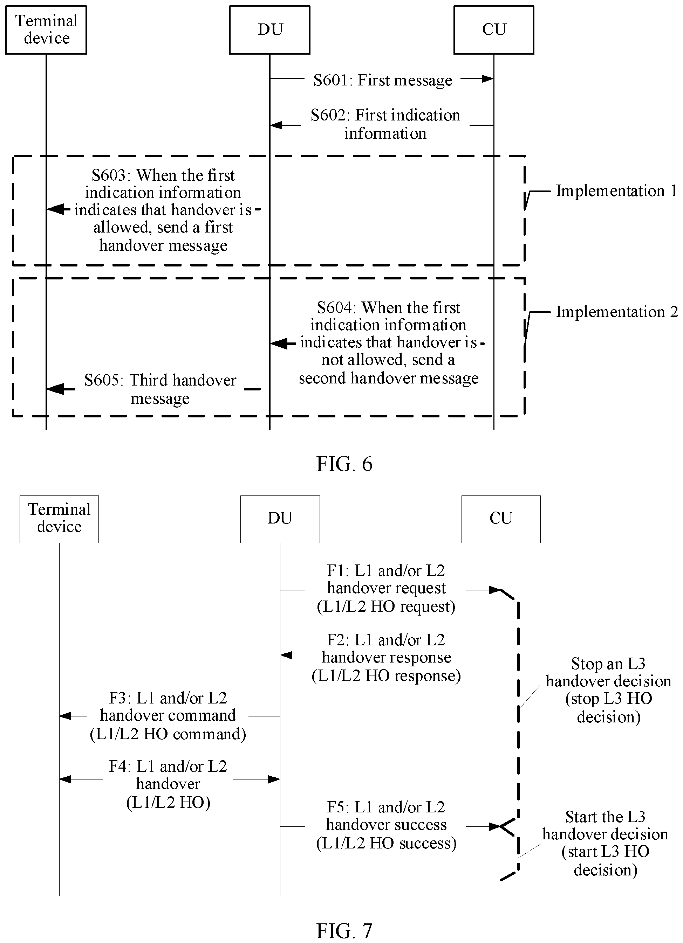

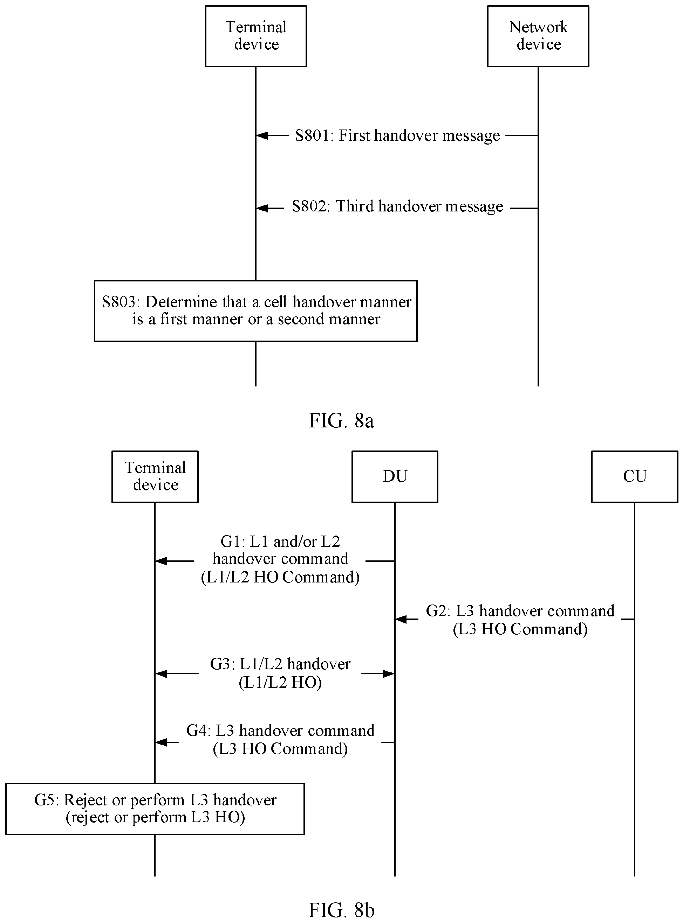

In the plurality of embodiments provided in this application, the foregoing technical problem is resolved by using a plurality of technical solutions. In an implementation, the foregoing conflict is resolved by using a decision of the DU, as shown in any one of the following embodiments in FIG. 4 and FIG. 5a to FIG. 5e, and a related embodiment. In another implementation, the foregoing conflict is resolved by using a decision of the CU, as shown in either of the following embodiments in FIG. 6 and FIG. 7, and a related embodiment. In still another implementation, the foregoing conflict is resolved by using a decision of the terminal device, as shown in either of the following embodiments in FIG. 8a and FIG. 8b, and a related embodiment. The following provides detailed descriptions.

FIG. 4 is a diagram of a communication method according to this application. The method includes the following steps.

S401: A DU sends a first handover message.

In this embodiment, the DU sends the first handover message in step S401, and correspondingly, a terminal device receives the first handover message in step S401. The first handover message indicates to hand over the terminal device from a source cell to a first target cell in a first manner, and the first manner includes an L1 and/or L2-based cell handover manner.

It should be understood that the first handover message may not explicitly indicate an identity of the source cell. In other words, both the DU and the terminal device may determine (or consider) a serving cell in which the terminal device is currently located as the source cell corresponding to the first handover message. In this application, unless otherwise specified, a handover message/a handover command may not explicitly indicate the identity of the source cell.

Optionally, for a case in which the DU sends the first handover message to the terminal device to trigger an L1 and/or L2 cell handover process, refer to implementation of FIG. 3b, FIG. 3c, and a related embodiment. For example, the first handover message may be the "layer 1/layer 2 handover command" in step 6 in FIG. 3c.

S402: A CU sends a second handover message.

In this embodiment, the CU sends the second handover message in step S402, and correspondingly, the DU receives the second handover message in step S402. The second handover message indicates to hand over the terminal device from the source cell to a second target cell in a second manner, and the second manner includes an L3-based cell handover manner.

Optionally, for a case in which the CU sends the second handover message to the DU in step S402 to trigger an L3 cell handover process, refer to implementation of FIG. 3a and a related embodiment. For example, the second handover message may be the "UE context modification request message" in step 5 in FIG. 3a.

In this application, the first target cell indicated by the first handover message and the second target cell indicated by the second handover message may be a same cell; or the first target cell indicated by the first handover message and the second target cell indicated by the second handover message may be different cells. This is not limited in this application.

In addition, the source cell and the first target cell may belong to a same DU, or the source cell and the first target cell may belong to different DUs. This is not limited herein. Similarly, the source cell and the second target cell may belong to a same DU, or the source cell and the second target cell may belong to different DUs. This is not limited herein.

S403: The DU determines that a cell handover manner is the first manner or the second manner.

In this embodiment, when the DU makes a cell handover decision result based on the first manner in step S401 and the CU makes a cell handover decision result based on the second manner in step S402, the DU determines, in step S403, that the cell handover manner of the terminal device is the first manner or the second manner.

The following provides further descriptions by using different implementation examples.

Implementation example 1: The DU determines, in step S403, that the cell handover manner of the terminal device is the first manner.

In the implementation example 1, when a first condition is met, the DU determines, in step S403, that the cell handover manner of the terminal device is the first manner. The first condition includes at least one of the following:
Case A: The DU determines that the second handover message includes priority information indicating a priority of the second handover message and the DU determines that the priority indicated by the priority information is lower than a preset priority.
Case B: The DU determines that the terminal device is successfully handed over in the first manner.
Case C: The DU determines that a first response message is received from the terminal device, where the first response message indicates that the first handover message is successfully received.

Specifically, when at least one of the foregoing is met, the DU determines that the cell handover manner of the terminal device is the first manner. Correspondingly, the DU may not perform, by discarding (discard) the second handover message, ignoring the second handover message, or the like, a cell handover process initiated based on the second manner, to avoid a failure of cell handover initiated based on the first manner.

In this application, the preset priority may be a priority of the first manner, the preset priority may be a preconfigured priority, or the preset priority may be implemented in another manner. This is not limited herein.

In a possible implementation, the terminal device (or the DU) may consider that a priority of the second manner is always lower than the priority of the first manner. For example, it is defined through protocol agreement that the priority of the second manner is lower than the priority of the first manner. For another example, that the priority of the second manner is always lower than the priority of the first manner is indicated through CU (or core network element) configuration.

It should be understood that in an implementation process of the case A, the case A may be described as that the DU determines that the second handover message includes priority information indicating a priority of the second manner and the DU determines that the priority indicated by the priority information is lower than the preset priority.

In addition, considering that the DU needs to determine, in step S403, that the cell handover manner is either of the first manner and the second manner, the implementation process of the case A may alternatively be implemented by using priority information of the first handover message (or the first manner). For example, the case A may also be described as that the DU determines that the first handover message includes priority information indicating a priority of the first handover message and the DU determines that the priority indicated by the priority information is higher than the preset priority. For another example, the case A may also be described as that the DU determines that the first handover message includes priority information indicating a priority of the first manner and the DU determines that the priority indicated by the priority information is higher than the preset priority.

It should be noted that in a plurality of implementation processes of the case A, when the priority of the first handover message (or the first manner) is equal to the preset priority, the DU determines, in step S403, that the cell handover manner of the terminal device is the first manner, or the DU determines, in step S403, that the cell handover manner of the terminal device is the second manner. This is not limited herein. Similarly, when the priority of the second handover message (or the second manner) is equal to the preset priority, the DU determines, in step S403, that the cell handover manner of the terminal device is the first manner, or the DU determines, in step S403, that the cell handover manner of the terminal device is the second manner. This is not limited herein.

It may be understood that when the DU determines that the cell handover manner of the terminal device is the first manner, the DU may perform, based on the previously sent first handover message, the cell handover process corresponding to the first manner with the terminal device, so that the terminal device performs the cell handover process and is handed over to the first target cell.

In a possible implementation of the implementation example 1, after the DU determines that the cell handover manner of the terminal device is the first manner, the DU sends at least one of the following to the CU:
information A: information indicating that the terminal device successfully completes cell handover in the first manner;
information B: information indicating that the terminal device is successfully handed over to the first target cell in the first manner;
information C: information indicating that the second handover message is discarded; or
information D: information indicating that the DU does not send a third handover message, where the third handover message indicates to hand over the terminal device from the source cell to the second target cell in the second manner.

Optionally, the information C carries information indicating that a reason why the second handover message is discarded is that the terminal device performs the first manner.

Optionally, the information D carries information indicating that a reason why the third handover message is not sent is that the terminal device performs the first manner.

It should be noted that when the source cell and the first target cell belong to the same DU (for ease of description, the DU to which the source cell belongs in step S403 is denoted as a DU 1), the DU 1 can sense whether the terminal device is successfully handed over to the first target cell in the first manner, and can determine whether the terminal device performs cell handover in the second manner. Therefore, in this case, the DU 1 may send at least one of the information A, the information B, the information C, or the information D to the CU. In other words, in this case, the CU may receive the at least one of the foregoing information from the DU 1.

In addition, when the source cell and the first target cell belong to the different DUs (for ease of differentiation, the DU to which the source cell belongs in step S403 is denoted as the DU 1, and the DU to which the first target cell belongs is denoted as a DU 2), the DU 1 can determine whether the terminal device performs cell handover in the second manner, and the DU 1 may also sense whether the terminal device is successfully handed over to the first target cell in the first manner. Therefore, the DU 1 may send at least one of the information A, the information B, the information C, or the information D to the CU. Because the DU 2 may also sense whether the terminal device is successfully handed over to the first target cell in the first manner, in this case, the DU 2 may send at least one of the information A or the information B to the CU. In other words, in this case, the CU may receive the at least one of the information A, the information B, the information C, or the information D from the DU 1, and the CU may receive the at least one of the information A or the information B from the DU 2. It should be understood that, in a possible implementation, the DU 1 sends at least one of the information C or the information D to the CU, and/or the DU 2 sends at least one of the information A or the information B to the CU.

Specifically, after the DU determines that the cell handover manner of the terminal device is the first manner, the DU may perform, based on the previously sent first handover message, the cell handover process corresponding to the first manner with the terminal device, and indicate, by using the at least one of the foregoing information, to the CU that the DU determines that the cell handover manner of the terminal device is the first manner. Therefore, the CU determines, based on the at least one of the foregoing information, that the terminal device performs cell handover in the first manner, and/or the CU determines, based on the at least one of the foregoing information, that the terminal device does not perform cell handover in the second manner.

It should be understood that, in the implementation example 1, the DU may perform the L1 and/or L2 cell handover process with the terminal device based on the first handover message sent in step S401. For an implementation process of the terminal device, refer to the implementation of FIG. 3b, FIG. 3c, and the related embodiment. Details are not described herein again.

Implementation example 2: The DU determines, in step S403, that the cell handover manner of the terminal device is the second manner.

In the implementation example 2, when a second condition is met, the DU determines that the cell handover manner of the terminal device is the second manner, where the second condition includes at least one of the following:
Case D: The DU determines that the second handover message includes first indication information, where the first indication information indicates to perform cell handover preferentially in the second manner.
Case E: The DU determines that the second handover message includes priority information indicating a priority of the second handover message and the DU determines that the priority indicated by the priority information is higher than a preset priority.
Case F: The DU determines that the terminal device fails to be handed over in the first manner.
Case G: The DU determines that a second response message is received from the terminal device, where the second response message indicates that the first handover message is not successfully received.
Case H: The DU determines that a response message for the first handover message is not received from the terminal device.

Specifically, when at least one of the foregoing is met, the DU determines that the cell handover manner of the terminal device is the second manner. Correspondingly, the DU does not perform a cell handover process initiated based on the first manner, to avoid a failure of cell handover initiated based on the second manner.

It should be understood that in an implementation process of the case D, the case D may be described as that the DU determines that the second handover message includes priority information indicating a priority of the second manner and the DU determines that the priority indicated by the priority information is higher than the preset priority. In a possible implementation, the terminal device (or the DU) may consider that a priority of the second manner is always higher than the priority of the first manner. For example, it is defined through protocol agreement that the priority of the second manner is always higher than the priority of the first manner. For another example, that the priority of the second manner is always higher than the priority of the first manner is indicated through CU (or core network element) configuration.

In addition, considering that the DU needs to determine, in step S403, that the cell handover manner is either of the first manner and the second manner, the implementation process of the case D may alternatively be implemented by using priority information of the first handover message (or the first manner). For example, the case D may also be described as that the DU determines that the first handover message includes priority information indicating a priority of the first handover message and the DU determines that the priority indicated by the priority information is lower than the preset priority. For another example, the case D may also be described as that the DU determines that the first handover message includes priority information indicating a priority of the first manner and the DU determines that the priority indicated by the priority information is lower than the preset priority.

It should be noted that in a plurality of implementation processes of the case D, when the priority of the first handover message (or the first manner) is equal to the preset priority, the DU determines, in step S403, that the cell handover manner of the terminal device is the first manner, or the DU determines, in step S403, that the cell handover manner of the terminal device is the second manner. This is not limited herein. Similarly, when the priority of the second handover message (or the second manner) is equal to the preset priority, the DU determines, in step S403, that the cell handover manner of the terminal device is the first manner, or the DU determines, in step S403, that the cell handover manner of the terminal device is the second manner. This is not limited herein.

In a possible implementation of the implementation example 2, after the DU determines that the cell handover manner of the terminal device is the second manner, the DU sends at least one of the following to the CU:
information E: information indicating that the terminal device successfully performs cell handover in the second manner;
information F: information indicating that the terminal device is successfully handed over to the second target cell in the second manner; or
information G: information indicating that the cell handover manner determined by the DU is the second manner.

It should be noted that when the source cell and the second target cell belong to the same DU (for ease of description, the DU to which the source cell belongs in step S403 is denoted as a DU 1), the DU 1 can sense whether the terminal device is successfully handed over to the second target cell in the second manner. Therefore, in this case, the DU 1 may send at least one of the information E, the information F, or the information G to the CU. In other words, in this case, the CU may receive the at least one of the foregoing information from the DU 1.

In addition, when the source cell and the second target cell belong to the different DUs (for ease of differentiation, the DU to which the source cell belongs in step S403 is denoted as the DU 1, and the DU to which the second target cell belongs is denoted as a DU 2), as described in the implementation example 1, the DU 1 may send at least one of the information E, the information F, or the information G to the CU, and/or the DU 2 may send at least one of the information E or the information F to the CU. In other words, in this case, the CU may receive the at least one of the information E, the information F, or the information G from the DU 1, and/or receive the at least one of the information E or the information F from the DU 2.

Specifically, after the DU determines that the cell handover manner of the terminal device is the second manner, the DU may perform, based on the third handover message, the cell handover process corresponding to the second manner with the terminal device, and indicate, by using the at least one of the foregoing information, to the CU that the DU determines that the cell handover manner of the terminal device is the second manner. Therefore, the CU determines, based on the at least one of the foregoing information, that the terminal device performs cell handover in the second manner.

In addition, in the implementation example 2, after the DU determines, in step S403, that the cell handover manner of the terminal device is the second manner, the method further includes: The DU sends a third handover message to the terminal device, where the third handover message indicates to hand over the terminal device from the source cell to the second target cell in the second manner. Specifically, when the DU determines that the cell handover manner of the terminal device is the second manner, the DU sends, to the terminal device, the third handover message indicating to hand over the terminal device from the source cell to the second target cell in the second manner, so that the terminal device performs, based on the third handover message, the cell handover process corresponding to the second manner.

Optionally, the third handover message includes configuration information of the second target cell; or delta configuration information of the second target cell and second indication information, where the second indication information indicates the terminal device to perform delta configuration on the delta configuration information of the second target cell based on configuration information of the source cell. In other words, the second indication information indicates an identity of the source cell. Specifically, the third handover message sent by the DU to the terminal device may include the configuration information related to the second target cell. Therefore, after the terminal device receives the third handover message, the terminal device is handed over to the second target cell based on the configuration information related to the second target cell.

Optionally, when the third handover message does not include the configuration information related to the second target cell, the terminal device may alternatively obtain the configuration information related to the second target cell in another manner. For example, in a process in which the terminal device communicates with the source cell, the terminal device receives configuration information of a neighboring cell from the source cell, where the neighboring cell includes the second target cell. For another example, in a process in which the terminal device communicates with the CU, the terminal device receives configuration information of a plurality of cells from the CU, and the plurality of cells include the second target cell.

It can be learned from the foregoing implementation process that, in the implementation example 2, after the DU determines, in step S403, that the cell handover manner of the terminal device is the second manner, the DU may further send the third handover message to the terminal device, where the third handover message indicates to hand over the terminal device from the source cell to the second target cell in the second manner. Correspondingly, the terminal device may receive the third handover message after step S403, and the terminal device may perform cell handover based on the third handover message. However, the terminal device has received the first handover message in step S401 and may perform cell handover based on the first handover message. The following further describes an implementation process of the terminal device.

In a possible implementation, when the terminal device receives the third handover message, the terminal device determines that the terminal device is not handed over to the first target cell, and that the terminal device is handed over to the second target cell in the second manner includes: The terminal device determines to suspend handover to the first target cell, and the terminal device is handed over to the second target cell in the second manner. Specifically, when the terminal device receives the third handover message from the DU, the terminal device determines to be handed over to the second target cell in the second manner. Therefore, when the terminal device currently does not complete the handover to the first target cell, the terminal device suspends a process of the handover to the first target cell, to ensure that the terminal device can be handed over to the second target cell in the second manner, and avoid unnecessary overheads.

In another possible implementation, the third handover message includes an identifier of the source cell. After the terminal device receives the third handover message, when the terminal device determines that the terminal device has been handed over to the first target cell, that the terminal device is handed over to the second target cell in the second manner includes: The terminal device is handed over from the source cell to the second target cell in the second manner. Specifically, when the terminal device receives the third handover message from the DU, the terminal device determines to be handed over to the second target cell in the second manner. Therefore, when the terminal device has currently completed the handover to the first target cell, the terminal device is to be handed over from the source cell to the second target cell in the second manner (for example, a configuration of the second target cell is determined based on a delta configuration of the second target cell carried in the third handover message and a configuration of the source cell), instead of being to be handed over from the first target cell to the second target cell in the second manner, to avoid a handover failure.

In another possible implementation, after the terminal device receives the third handover message, when the terminal device determines that cell handover to the first target cell is not performed, that the terminal device is handed over to the second target cell in the second manner includes: The terminal device determines to suspend the handover to the first target cell, and the terminal device is handed over to the second target cell in the second manner. Specifically, when the terminal device receives the third handover message from the DU, the terminal device determines to be handed over to the second target cell in the second manner. Therefore, when the terminal device currently does not start the handover to the first target cell, the terminal device may be handed over to the second target cell in the second manner without performing the process of the handover to the first target cell, to ensure that the terminal device can be handed over to the second target cell in the second manner, and avoid unnecessary overheads.

In conclusion, based on the embodiment shown in FIG. 4 and the related embodiment, it can be learned that when the DU initiates the L1 and/or L2 cell handover process to the terminal device based on the first handover message in step S401, and the CU initiates the L3 cell handover process to the terminal device based on the second handover message in step S402, the DU determines, in step S403, that the cell handover manner of the terminal device is either of the first manner and the second manner, so that the DU can subsequently initiate the cell handover process based on the either of the first manner and the second manner. In other words, when the DU makes a cell handover decision result based on the first manner and the CU makes a cell handover decision result based on the second manner, the DU initiates the cell handover process based on the either of the first manner and the second manner in a DU decision manner, to avoid a cell handover failure caused by an unclear handover behavior of the terminal device, and improve reliability of the cell handover process.

It can be learned from the embodiment shown in FIG. 4 that different implementation processes of the case A to the case H enable the DU to make different decisions in step S403. The following describes the implementation processes of the case A to the case H by using examples based on implementation processes shown in FIG. 5a to FIG. 5e. In the following examples, an example in which a source cell, a first target cell, and a second target cell all belong to a same DU is used for description.

It should be noted that, when an L3 handover command generated by a CU reaches a DU, if the DU does not make an L1 and/or L2 handover decision, the DU forwards the L3 handover command to UE, and stops making the L1 and/or L2 handover decision and/or sending an L1 and/or L2 handover command. In this scenario, because the DU can learn whether the L3 handover command reaches the DU, the DU can avoid a conflict between the subsequent L1 and/or L2 handover decision and the previous L3 handover command. However, when a moment at which the L3 handover command generated by the CU reaches the DU is later than a moment at which the DU sends the L1 and/or L2 handover command, the DU processes the received L3 handover command in any one of the following embodiments. This scenario is described in detail in the following steps of the embodiments shown in FIG. 5a to FIG. 5e.

The embodiment shown in FIG. 5a mainly relates to implementation processes such as the case D, the case B, and the case F. As shown in FIG. 5a, this embodiment includes the following steps.

Step A1: A DU sends an L1 and/or L2 handover command (L1/L2 HO Command) to a terminal device.

Specifically, in step A1, the DU makes an L1 and/or L2 handover decision based on an L1 measurement result previously reported by the terminal device (for example, the implementation process of the beam measurement report in step 5 in FIG. 3c), and generates and sends the L1 and/or L2 handover command in step A1.

It may be understood that, the L1 and/or L2 handover command may be the first handover message in step S401. To be specific, the L1 and/or L2 handover command indicates to hand over the terminal device from a source cell (denoted as a cell 1) to a first target cell (denoted as a cell 2).

Step A2: The DU sends an L1 and/or L2 handover notification (L1/L2 HO notification) message to a CU.

Specifically, the DU notifies the CU of a decision result obtained in step A1. To be specific, the DU sends the L1 and/or L2 handover notification to the CU in step A2, so that the CU determines, based on the message, that the DU has currently made the L1 and/or L2 handover decision.

For example, in step A2, the DU sends an F1 application protocol (F1 application protocol, F1 AP) message through an F1 interface. The message includes at least one of the following information: indication information indicating that the DU makes the L1 and/or L2 handover decision, and identification information of a target cell on which the L1 and/or L2 handover decision is made by the DU.

Optionally, the F1AP message may be a UE context modification required (UE CONTEXT MODIFICATION REQUIRED) message, or a new F1AP message type may be defined. A specific type of F1AP message used to send information about the L1 and/or L2 handover decision made by the DU is not limited in this embodiment.

It should be understood that an actual occurrence sequence of step A1 and step A2 is not limited in this embodiment. To be specific, the DU may send the message in step A2 after sending the message in step A1; or the DU may first send the message in step A2 and then send the message in step A1 after making the L1 and/or L2 handover decision and before sending the L1 and/or L2 handover command.

Step A3: The CU sends an L3 handover command (L3 HO Command) to the DU.

Specifically, when making an L3 handover decision on the terminal device, the CU generates the L3 handover command. The command needs to be first sent to the DU, and then the DU sends the command to the terminal device (for example, the implementation processes of step 5 and step 6 in FIG. 3a).

It may be understood that the L3 handover command may be the second handover message in step S402. To be specific, the L3 handover command indicates to hand over the terminal device from the source cell (denoted as the cell 1) to a second target cell (denoted as a cell 3).

(Optional step) step A4: The CU sends an L1 and/or L2 handover response (L1/L2 HO response) message to the DU.

Specifically, step A4 is an optional step, and the L1 and/or L2 handover response message is a response message sent by the CU for L1 and/or L2 handover information received in step A2.

In addition, if the CU has received information related to L1 and/or L2 handover in step A2 before delivering the L3 handover command in step A3, the CU may choose to stop generating/delivering the L3 handover command, to avoid a handover command conflict. However, in the following two cases, the CU may still deliver the L3 handover command in step A3:

Case 1: After generating/delivering the L3 handover command, the CU receives the message in step A2. In the case 1, a generated conflict may be resolved in a subsequent step A6, that is, the conflict is resolved by using a decision of the DU in the subsequent step A6.

Case 2: When the CU receives the message in step A2, but considers that a priority of L3 handover is higher (or more urgent), the CU expects the terminal device to still perform the L3 handover. In the case 2, a generated conflict may be resolved by using at least one of step A3 or step A6.

Optionally, in an implementation process of resolving the conflict by using step A3 in the case 2, the CU may include first indication information (that is, the implementation process of the case D) in the L3 handover command sent to the DU in step A3, where the first indication information indicates to perform cell handover preferentially in a second manner. For example, the first indication information may be a newly added field (field) in the L3 handover command, and indicates to preferentially perform the L3 handover, or indicates that the L3 handover is more important (or exigent, or urgent) than the L1 and/or L2 handover.

Optionally, when the L3 handover command sent by the CU to the DU in step A3 carries the first indication information, step A4 may not be required, because the message in step A3 may already indicate that the CU learns of presence of the L1 and/or L2 handover information and still intends to preferentially perform the L3 handover process.

Step A5: Perform the L1 and/or L2 handover (L1/L2 HO) between the terminal device and the DU.

Optionally, if the message in step A3 does not carry the first indication information, the DU may cooperate with the terminal device to perform the L1 and/or L2 handover in step A5, so that the terminal device is handed over from the cell 1 to the cell 2 in an L1 and/or L2 handover manner.

Optionally, if the message in step A3 carries the first indication information, the DU may reject, in step A5, the L1 and/or L2 handover performed by the terminal device, so that the terminal device is not handed over from the cell 1 to the cell 2 in an L1 and/or L2 handover manner.

Step A6: The DU discards or sends the L3 handover command (Discard or send L3 HO command) message.

In a possible implementation of step A6, if the DU determines that the L1 and/or L2 handover performed by the terminal device in step A5 is successfully completed (that is, the implementation process of the case B), the DU may perform any one of the following implementations to avoid a conflict, including:

Manner 1: The DU discards the L3 handover command, to avoid a handover failure caused by receiving of the L3 handover command by the terminal device.

Optionally, configuration information included in the L3 handover command sent by the CU in step A3 may be delta (delta) configuration information. A delta configuration means that the DU needs to send only a different part of configuration information of the second target cell (that is, the cell 3) and configuration information of the source cell (that is, the cell 1), and does not need to send a same part. In other words, if the terminal device determines a configuration of the cell 3 based on the delta configuration information, the terminal device needs to perform delta configuration based on a configuration of the source cell, to obtain the configuration of the cell 3. However, in the manner 1, because the terminal device has been handed over from the cell 1 to the first target cell (that is, the cell 2) through the L1 and/or L2 handover in this case, when the delta configuration information in the L3 handover command is read, during delta configuration, the terminal device may perform delta configuration based on a cell (that is, the cell 2) in which the terminal device is currently located, to obtain an incorrect target cell configuration. As a result, a handover failure is caused.

Manner 2: The DU still sends the L3 handover command to the terminal device, but needs to additionally indicate the terminal device to perform delta configuration based on the cell 1. In other words, after the terminal device receives the additional indication in the A3 handover command in step A6, the terminal device performs delta configuration based on the configuration information of the cell 1, to obtain the configuration information of the second target cell (that is, the cell 3).

It should be understood that, in this case, although the terminal device has been handed over from the cell 1 to the cell 2 through the L1 and/or L2 handover, the configuration information of the cell 1 should still be retained and not released.

Manner 3: The DU still sends the L3 handover command to the terminal device, and the terminal device performs, by default, delta configuration based on the source cell (that is, the cell 1) before the L1 and/or L2 handover, to determine the configuration information of the second target cell (that is, the cell 3).

In a possible implementation of step A6, if the DU determines that the L1 and/or L2 handover performed by the terminal device in step A5 fails (that is, the implementation process of the case F), the DU may send the L3 handover command to the terminal device, so that the terminal device performs cell handover to the cell 3 based on the L3 handover command.

(Optional step) step A7: The DU sends an L1 and/or L2 handover success (L1/L2 HO success) to the CU.

Specifically, step A7 is an optional step. When the terminal device successfully completes the L1 and/or L2 handover, the DU notifies the CU of handover complete information.

Optionally, if the DU discards the L3 handover command in step A6, the DU also notifies the CU of at least one of the following information: the L3 handover command is not delivered to the terminal device/has been discarded (that is, the foregoing information C/information D); a reason why the L3 handover command is not delivered to the terminal device is that the L1 and/or L2 handover has been performed (that is, the foregoing information B); or the terminal device has performed the L1 and/or L2 handover (that is, the foregoing information A). Further optionally, these pieces of information may be sent in a same message, or may be sent in a plurality of messages. This is not limited in this embodiment.

Optionally, when the terminal device fails to perform the L1 and/or L2 handover, the DU may not send the message in step 7.

It can be learned from the embodiment shown in FIG. 5a that, in step A4, if the L3 handover command sent by the CU to the DU in step A3 may carry the first indication information indicating to perform cell handover preferentially in the second manner, as described in the implementation process of the case D, the DU triggers the L3 handover, so that the terminal device performs cell handover based on the L3 handover.

In the manner 1 of step A6, if the DU determines that the L1 and/or L2 handover performed by the terminal device in step A5 is successfully completed, as described in the implementation process of the case B, the DU discards the L3 handover command, to avoid a handover failure caused by receiving of the L3 handover command by the terminal device.

In step A6, if the DU determines that the L1 and/or L2 handover performed by the terminal device in step A5 fails, as described in the implementation process of the case F, the DU may send the L3 handover command to the terminal device, so that the terminal device performs cell handover to the cell 3 based on the L3 handover command.

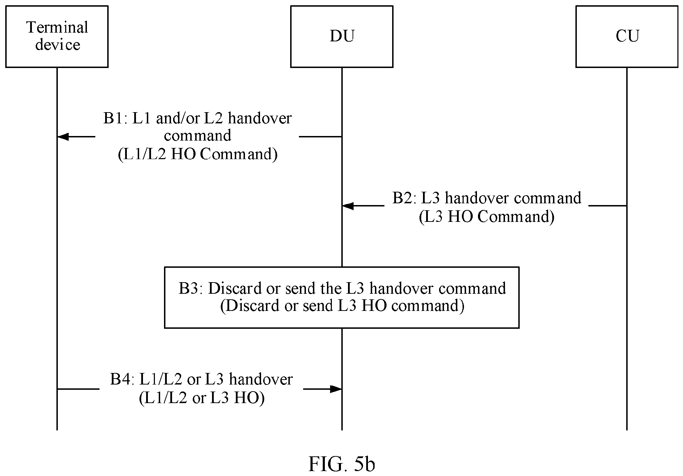

The embodiment shown in FIG. 5b mainly relates to implementation processes such as the case A and the case E. As shown in FIG. 5b, this embodiment includes the following steps.

Step B1: ADU sends an L1 and/or L2 handover command (L1/L2 HO Command) to a terminal device.

Specifically, in step B1, the DU makes an L1 and/or L2 handover decision based on an L1 measurement result previously reported by the terminal device (for example, the implementation process of the beam measurement report in step 5 in FIG. 3c), and generates and sends the L1 and/or L2 handover command in step B1.

It may be understood that, the L1 and/or L2 handover command may be the first handover message in step S401. To be specific, the L1 and/or L2 handover command indicates to hand over the terminal device from a source cell (denoted as a cell 1) to a first target cell (denoted as a cell 2).

Step B2: A CU sends an L3 handover command (L3 HO Command) to the DU.

Specifically, when making an L3 handover decision on the terminal device, the CU generates the L3 handover command. The command needs to be first sent to the DU, and then the DU sends the command to the terminal device (for example, the implementation processes of step 5 and step 6 in FIG. 3a).

It may be understood that the L3 handover command in step B2 may be the second handover message in step S402. To be specific, the L3 handover command indicates identification information of handing over the terminal device from the source cell (denoted as the cell 1) to a second target cell (denoted as a cell 3).

Optionally, the L3 handover command includes identification information of the source cell.

Optionally, the L3 handover command carries information indicating a priority of the L3 handover command. For example, the information may be a value of a field in the L3 handover command, and the value may be specifically a value indicating the priority of the L3 handover command, a value indicating importance of the L3 handover command, a handover cause value indicating the L3 handover command, or the like. This is not limited herein.

Further optionally, the value may be positively correlated with the priority of the L3 handover command. That is, a larger value indicates a higher priority of the L3 handover command, and on the contrary, a smaller value indicates a lower priority of the L3 handover command. Alternatively, the value may be negatively correlated with the priority of the L3 handover command. That is, a smaller value indicates a higher priority of the L3 handover command, and on the contrary, a larger value indicates a lower priority of the L3 handover command.

In addition, the information indicating the priority of the L3 handover command and the L3 handover command may be carried in a same message, or the information indicating the priority of the L3 handover command and the L3 handover command may be carried in different messages. This is not limited herein. In this embodiment, implementation of the former is used as an example herein.

Step B3: The DU discards or sends the L3 handover command (Discard or send L3 HO command) message.

Specifically, the DU determines, based on information carried in the L3 handover command in step B2, to discard the L3 handover command, or to send the L3 handover command to the terminal device.

In a possible implementation, when the L3 handover command in step B2 indicates a low priority (or low importance, or a low priority/low importance corresponding to the handover cause value), the DU may discard the L3 handover command, and the DU performs step B4 (that is, the implementation process of the case A).

Optionally, the DU notifies the CU of a case of discarding the L3 handover command.

In another possible implementation, when the L3 handover command in step B2 indicates a high priority (or high importance, or a high priority/high importance corresponding to the handover cause value), the DU delivers the L3 handover command to the terminal device (that is, the implementation process of the case E). It may be understood that the L3 handover command in step B3 may be the third handover message in step S403. To be specific, the L3 handover command indicates to hand over the terminal device from the source cell (denoted as the cell 1) to the second target cell (denoted as the cell 3).

Optionally, because the DU has performed the decision process in step B3 based on the information indicating the priority of the L3 handover command, to determine a cell handover manner of the terminal device, the DU does not need to send the information indicating the priority of the L3 handover command to the UE.

(Optional step) step B4: Perform L1 and/or L2 handover (L1/L2 HO) or L3 handover (L3 HO) between the terminal device and the DU.

In a possible implementation, if the DU discards the L3 handover command in step B3, the terminal device performs the L1 and/or L2 handover based on the L1 and/or L2 handover command received in step 1.

Optionally, after the L1 and/or L2 handover is completed, the DU sends a message to notify the CU of information indicating that the L1 and/or L2 handover of the terminal device is completed. Further optionally, the message may also include information indicating that the DU discards the L3 handover command.

In another possible implementation, if the DU delivers the L3 handover command in step B3, the terminal device may perform the following operations based on the following different cases:

If the terminal device has started to perform the L1 and/or L2 handover, but has not completed the L1 handover and/or the L2 handover, after the DU delivers the L3 handover command in step B3, the terminal device may immediately terminate the L1 and/or L2 handover process, and perform the L3 handover based on content indicated by the L3 handover command. When the L3 handover command carries the identification information of the source cell existing when an L3 handover decision is made, the terminal device validates a delta configuration in the L3 handover command based on configuration information of the source cell.

If the terminal device has started to perform the L1 and/or L2 handover, and has completed the L1 handover and/or the L2 handover, after the DU delivers the L3 handover command in step B3, the terminal device performs the L3 handover based on content indicated by the L3 handover command. When the L3 handover command carries the identification information of the source cell existing when an L3 handover decision is made, the terminal device validates a delta configuration in the L3 handover command based on configuration information of the source cell.

If the terminal device has not started the L1 and/or L2 handover, the terminal device may not perform the L1 and/or L2 handover, and directly starts to perform the L3 handover process.

It can be learned from the embodiment shown in FIG. 5b that, in step B3, when the L3 handover command in step B2 indicates the low priority (or the low importance, or the low priority/low importance corresponding to the handover cause value), as described in the implementation process of the case A, the DU may discard the L3 handover command, and the DU performs the L1 and/or L2 handover in step B4, to avoid a handover failure caused by receiving of the L3 handover command by the terminal device.

In step B3, when the L3 handover command in step B2 indicates the high priority (or the high importance, or the high priority/high importance corresponding to the handover cause value), as described in the implementation process of the case E, the DU delivers the L3 handover command to the terminal device, so that the terminal device performs cell handover based on the L3 handover.

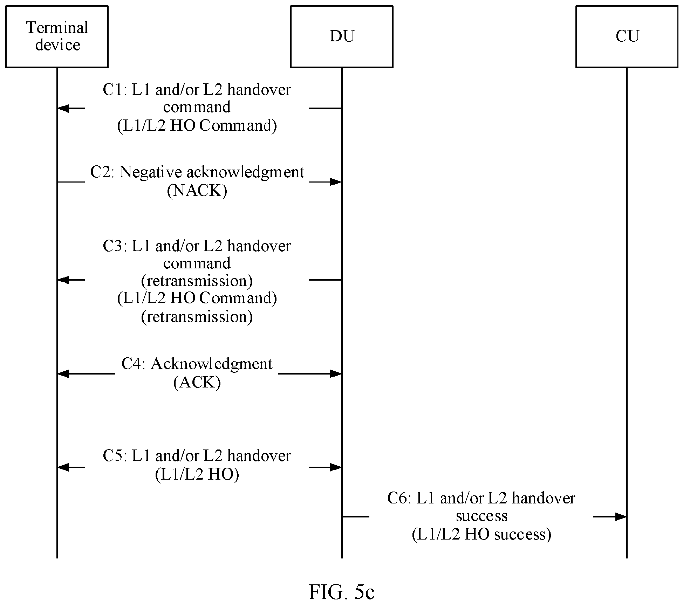

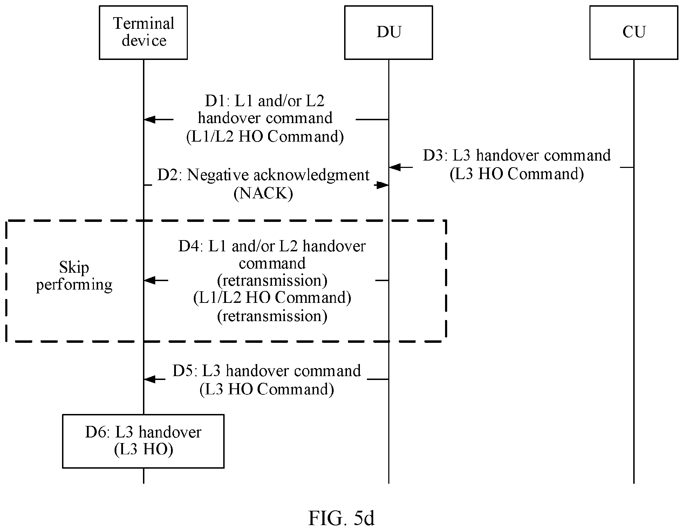

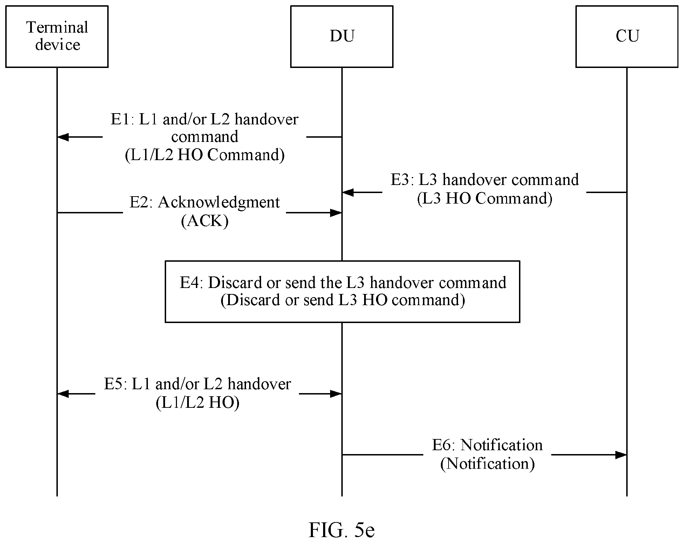

The embodiment shown in FIG. 5d mainly relates to implementation processes of the case G and the case H, and the embodiment shown in FIG. 5e mainly relates to an implementation process of the case C. For ease of understanding the implementation processes in FIG. 5d and FIG. 5e, the following first describes, by using the embodiment shown in FIG. 5c, an implementation process in which a terminal device feeds back information to a DU in an L1 and/or L2 handover process.

As shown in FIG. 5c, this embodiment includes the following steps.

Step C1: The DU sends an L1 and/or L2 handover command (L1/L2 HO Command) to the terminal device.

Specifically, in step C1, the DU makes an L1 and/or L2 handover decision based on an L1 measurement result previously reported by the terminal device (for example, the implementation process of the beam measurement report in step 5 in FIG. 3c), and generates and sends the L1 and/or L2 handover command in step C1.

It may be understood that, the L1 and/or L2 handover command may be the first handover message in step S401. To be specific, the L1 and/or L2 handover command indicates to hand over the terminal device from a source cell (denoted as a cell 1) to a first target cell (denoted as a cell 2).

Step C2: The terminal device sends a negative acknowledgment (NACK) to the DU.

In a possible implementation, if the terminal device fails to decode/receive the L1/L2 handover command in step C1, the terminal device performs step C2 and returns a message (for example, the NACK message) to indicate that decoding/receiving fails.

In another possible implementation, if the terminal device fails to receive the L1/L2 handover command in step C1, the terminal device does not perform step C2, that is, the terminal device does not return any message.

Step C3: The DU sends the L1 and/or L2 handover command (retransmission) (L1/L2 HO Command) (retransmission) to the terminal device.

Specifically, when the DU receives the NACK message in step C2 (or the DU does not receive a response message corresponding to step C1), the DU performs step C3, that is, the DU retransmits the L1 and/or L2 handover command in step C3.

Optionally, when the DU receives the ACK message from the terminal device in step C2, the DU directly triggers step C5 without performing step C3 and step C4.

Step C4: The terminal device sends an acknowledgment (ACK) to the DU.

Specifically, if the terminal device successfully decodes/receives the L1/L2 handover command in step C3, the terminal device returns a message (for example, the ACK message) in step C4 to indicate that decoding/receiving succeeds. In addition, the terminal device and the DU trigger step C5.

Step C5: Perform L1 and/or L2 handover (L1/L2 HO) between the terminal device and the DU.

(Optional step) step C6: The DU sends an L1 and/or L2 handover success (L1/L2 HO success) to a CU, to indicate to the CU that the terminal device has successfully completed handover in an L1 and/or L2 handover manner.

A method shown in FIG. 5d includes the following steps.

Step D1: ADU sends an L1 and/or L2 handover command (L1/L2 HO Command) to a terminal device.

Specifically, in step D1, the DU makes an L1 and/or L2 handover decision based on an L1 measurement result previously reported by the terminal device (for example, the implementation process of the beam measurement report in step 5 in FIG. 3c), and generates and sends the L1 and/or L2 handover command in step D1.

It may be understood that, the L1 and/or L2 handover command may be the first handover message in step S401. To be specific, the L1 and/or L2 handover command indicates to hand over the terminal device from a source cell (denoted as a cell 1) to a first target cell (denoted as a cell 2).

Step D2: The terminal device sends a negative acknowledgment (NACK) to the DU.

In a possible implementation, if the terminal device fails to decode/receive the L1/L2 handover command in step D1, the terminal device performs step D2 and returns a message (for example, the NACK message) to indicate that decoding/receiving fails.

In another possible implementation, if the terminal device fails to receive the L1/L2 handover command in step D1, the terminal device does not perform step D2, that is, the terminal device does not return any message.

Step D3: A CU sends an L3 handover command (L3 HO Command) to the DU.

Specifically, when making an L3 handover decision on the terminal device, the CU generates the L3 handover command. The command needs to be first sent to the DU, and then the DU sends the command to the terminal device (for example, the implementation processes of step 5 and step 6 in FIG. 3a).

It may be understood that the L3 handover command in step D3 may be the second handover message in step S402. To be specific, the L3 handover command indicates identification information of handing over the terminal device from the source cell (denoted as the cell 1) to a second target cell (denoted as a cell 3).

Optionally, the DU may receive the L3 handover command in step D3 before the DU receives the NACK in step D2. Alternatively, the DU may receive the L3 handover command in step D3 before the DU receives the NACK in step D2 but fails to decode the NACK.

Step D4 shown in FIG. 5d is a step that is not performed by the DU. Different from step C3, the DU does not need to send the L1 and/or L2 handover command (retransmission) (L1/L2 HO Command) (retransmission) to the terminal device in step D4, and after determining, in step D3, that the terminal device sends the NACK (or the terminal device does not send a response message), the DU triggers step D5 and step D6, that is, the DU determines that a cell handover manner of the terminal device is L3 handover (that is, the implementation process of the case G or the case H).

Step D5: The DU sends an L3 handover command (L3 HO Command) to the terminal device.

It may be understood that the L3 handover command in step D5 may be the third handover message in step S403. To be specific, the L3 handover command indicates to hand over the terminal device from the source cell (denoted as the cell 1) to the second target cell (denoted as the cell 3).

Step D6: The terminal device performs the L3 handover (L3 HO).

It can be learned from the embodiment shown in FIG. 5d that, because the DU determines, in step D2, that the terminal device fails to receive/decode the L1 and/or L2 handover command, the DU determines that the terminal device currently does not perform L1 and/or L2 handover. To improve a cell handover success rate of the terminal device, as described in the implementation process of the case G or the case H, the DU triggers step D5 and step D6 without performing step D4, so that the terminal device performs cell handover based on the L3 handover.

A method shown in FIG. 5e includes the following steps.

Step E1: ADU sends an L1 and/or L2 handover command (L1/L2 HO Command) to a terminal device.

Specifically, in step E1, the DU makes an L1 and/or L2 handover decision based on an L1 measurement result previously reported by the terminal device (for example, the implementation process of the beam measurement report in step 5 in FIG. 3c), and generates and sends the L1 and/or L2 handover command in step E1.

It may be understood that, the L1 and/or L2 handover command may be the first handover message in step S401. To be specific, the L1 and/or L2 handover command indicates to hand over the terminal device from a source cell (denoted as a cell 1) to a first target cell (denoted as a cell 2).

Step E2: The terminal device sends an acknowledgment (ACK) to the DU.

Specifically, if the terminal device successfully decodes/receives the L1/L2 handover command in step E1, the terminal device returns a message (for example, the ACK message) in step E2 to indicate that decoding/receiving succeeds.

Step E3: A CU sends an L3 handover command (L3 HO Command) to the DU.

Specifically, when making an L3 handover decision on the terminal device, the CU generates the L3 handover command. The command needs to be first sent to the DU, and then the DU sends the command to the terminal device (for example, the implementation processes of step 5 and step 6 in FIG. 3a).

It may be understood that the L3 handover command in step E3 may be the second handover message in step S402. To be specific, the L3 handover command indicates identification information of handing over the terminal device from the source cell (denoted as the cell 1) to a second target cell (denoted as a cell 3).

Optionally, the DU may receive the L3 handover command in step E3 before the DU receives the ACK in step E2. Alternatively, the DU may receive the L3 handover command in step E3 before the DU receives the ACK in step E2 but fails to decode the ACK.

Step E4: The DU discards or sends the L3 handover command (Discard or send L3 HO command).

It may be understood that, when the DU receives the ACK message for the L1/L2 handover command in step E2, the DU may determine that the terminal device is to perform L1 and/or L2 handover subsequently, and therefore discard the L3 handover command.

Step E5: Perform the L1 and/or L2 handover (L1/L2 HO) between the terminal device and the DU.

Step E6: The DU sends a notification (Notification) to the CU.

It can be learned from the embodiment shown in FIG. 5e that, because the DU determines, in step E2, that the terminal device successfully receives the L1 and/or L2 handover command, the DU determines that the terminal device can currently perform the L1 and/or L2 handover. To improve a cell handover success rate of the terminal device, as described in the implementation process of the case C, the DU discards the L3 handover command in step E4, to avoid a handover failure caused by receiving of the L3 handover command by the terminal device. In addition, a process in which the DU triggers step E5 and step E6 enables the terminal device to perform the L1 and/or L2 handover, and enables the CU to learn of a handover result.

In a possible implementation, in any one of the embodiments shown in FIG. 4 and FIG. 5a to FIG. 5e, step S402 may be performed after step S401. To be specific, any one of the foregoing embodiments may provide a solution to a possible conflict between the L1/L2 handover and the L3 handover after the L1/L2 handover command is sent from the DU. In addition, in any one of the foregoing embodiments, step S402 may be performed before step S401. To be specific, in a scenario in which the DU has made the L1/L2 handover decision but has not sent the L1/L2 handover command, if the DU receives the L3 handover command sent by the CU, the DU may properly assemble subsequent downlink sending messages by using a method similar to any one of the foregoing embodiments, to avoid a handover command conflict. For example, the DU may use the following manners in step S403 for implementation:
(1) The DU determines, in step S403, that the cell handover manner of the terminal device is the second manner. In other words, the DU does not assemble the L1/L2 handover command and the L3 handover command into a same downlink data packet, and may preferably assemble the L3 handover command into a downlink data packet (that is, the DU sends the L3 handover command and discards the L1/L2 handover command).
(2) The DU determines, in step S403, that the cell handover manner of the terminal device is the first manner. In other words, the DU does not assemble the L1/L2 handover command and the L3 handover command into a same downlink data packet, and may preferentially assemble the L1/L2 handover command into a downlink data packet (that is, the DU sends the L1/L2 handover command and discards the L3 handover command).

Optionally, the DU buffers the L3 handover command. When the L1/L2 handover fails, the DU sends the L3 handover command to the UE. When the L1/L2 handover succeeds, the DU discards the L3 handover command. Further, the DU notifies the CU of at least one of the following information: the L3 handover command is discarded, a reason why the L3 handover command is discarded, or the UE has performed the L1/L2 handover.

(3) The DU determines, in step S403, that the cell handover manner of the terminal device is a high-priority (or high-importance or the like) manner. For example, when the L1/L2 handover command has a high priority (or has high importance, or the handover cause value indicates a high priority of the L1/L2 handover command), the DU preferentially assembles and sends the L1/L2 handover command (that is, the DU sends the L1/L2 handover command and discards the L3 handover command). For another example, when the L3 handover command has a high priority (or has high importance, or the handover cause value indicates a high priority of the L3 handover command), the DU preferentially assembles and sends the L3 handover command (that is, the DU sends the L3 handover command and discards the L1/L2 handover command).

FIG. 6 is a diagram of a communication method according to this application. The method includes the following steps.

S601: ADU sends a first message.

In this embodiment, the DU sends the first message in step S601, and correspondingly, a CU receives the first message in step S601. The first message is used to request to hand over a terminal device to a first target cell in a first manner, and the first manner includes an L1-based cell handover manner and/or an L2-based cell handover manner.

S602: The CU sends first indication information.

In this embodiment, the CU sends the first indication information in step S602, and correspondingly, the DU receives the first indication information in step S602. The first indication information indicates whether the terminal device is allowed to be handed over to the first target cell.

In a possible implementation, in step S602, the first indication information is carried in a second message, and the second message indicates that the first message is successfully received. Specifically, the first indication information sent by the CU may be carried in the second message indicating that the first message is successfully received, to reduce overheads.

Optionally, the first indication information may alternatively be carried in another message different from the second message.

As shown in FIG. 6, after step S602, the DU may perform an implementation 1 (that is, step S603 in the following), or the DU may perform an implementation 2 (that is, step S604 and step S605 in the following). The following provides detailed descriptions.

S603: When the first indication information indicates that the handover is allowed, the DU sends a first handover message.

In this embodiment, when the DU determines that the first indication information received in step S602 indicates that the terminal device is allowed to be handed over to the first target cell, the DU sends the first handover message to the terminal device in step S603, where the first handover message indicates to hand over the terminal device to the first target cell in the first manner. Correspondingly, the terminal device receives the first handover message in step S603.

In a possible implementation, the first target cell corresponds to the DU. After the DU sends the first handover message based on the first indication information, the method further includes: After the DU determines that the terminal device is successfully handed over to the first target cell, the DU sends at least one of the following: information indicating that the terminal device successfully completes cell handover in the first manner, or information indicating that the terminal device is successfully handed over to the first target cell in the first manner. Specifically, after the DU determines that a cell handover manner of the terminal device is the first manner, the DU may perform, based on the first handover message, a cell handover process corresponding to the first manner with the terminal device, and indicate, by using the at least one of the foregoing information, to the CU that the DU determines that the cell handover manner of the terminal device is the first manner, so that the CU determines, based on the at least one of the foregoing information, that the terminal device is successfully handed over to the first target cell in the first manner.

In a possible implementation, the first target cell corresponds to the DU (or the DU manages the first target cell, that is, both the source cell and the first target cell belong to the DU). After the DU sends the first handover message based on the first indication information, the method further includes: After the DU determines that the terminal device fails to be handed over to the first target cell, the DU sends at least one of the following: information indicating that the terminal device fails to be handed over in the first manner, or information indicating that the terminal device fails to be handed over to the first target cell in the first manner. Specifically, after the DU determines that the cell handover manner of the terminal device is the first manner, the DU may perform, based on the first handover message, the cell handover process corresponding to the first manner with the terminal device, and indicate, by using the at least one of the foregoing information, to the CU that the DU determines that the cell handover manner of the terminal device is the first manner, so that the CU determines, based on the at least one of the foregoing information, that the terminal device fails to be handed over to the first target cell.

S604: When the first indication information indicates that the handover is not allowed, the CU sends a second handover message.

In this embodiment, when the DU determines that the first indication information received in step S602 indicates that the terminal device is not allowed to be handed over to the first target cell, the CU sends the second handover message in step S604 after step S602. The second handover message indicates to hand over the terminal device to a second target cell in a second manner, and the second manner includes an L3-based cell handover manner. Correspondingly, the DU receives the second handover message in step S604.

In a possible implementation, the CU may combine the indication information sent in step S602 and the indication information sent in step S604 into a same message for sending, that is, indicate, by using the same message, that the terminal device is not allowed to be handed over to the first target cell in the first manner and indicate that the terminal device needs to be handed over to the second target cell in the second handover manner.

S605: The DU sends a third handover message.

In this embodiment, after the DU receives the second handover message in step S604, the DU sends the third handover message to the terminal device in step S605, where the third handover message indicates to hand over the terminal device to the second target cell in the second manner. Correspondingly, the terminal device receives the third handover message in step S605.

In step S605, when the first indication information indicates that the terminal device is not allowed to be handed over to the first target cell, the DU further receives, from the CU, the second handover message indicating to hand over the terminal device to the second target cell in the second manner, and the DU sends, to the terminal device, the third handover message indicating to hand over the terminal device to the second target cell in the second manner. In other words, after the DU makes a cell handover decision result in the first manner, the DU determines, in a CU decision manner, whether to initiate the cell handover process based on the first manner. In addition, when the CU indicates that the cell handover process of the terminal device is not allowed to be initiated based on the first manner, the CU does not initiate the cell handover process of the terminal device based on the first manner, and initiates the cell handover process of the terminal device based on the second manner after receiving the second handover message from the CU.

In a possible implementation, the third handover message includes configuration information of the second target cell; or delta configuration information of the second target cell and second indication information, where the second indication information indicates the terminal device to perform delta configuration on the second target cell based on configuration information of the source cell. In other words, the second indication information indicates an identity of the source cell. Specifically, the third handover message sent by the DU to the terminal device may include the configuration information related to the second target cell. Therefore, after the terminal device receives the third handover message, the terminal device is handed over to the second target cell based on the configuration information related to the second target cell.

Optionally, when the third handover message does not include the configuration information related to the second target cell, the terminal device may alternatively obtain the configuration information related to the second target cell in another manner. For example, in a process in which the terminal device communicates with the source cell, the terminal device receives configuration information of a neighboring cell from the source cell, where the neighboring cell includes the second target cell. For another example, in a process in which the terminal device communicates with the CU, the terminal device receives configuration information of a plurality of cells from the CU, and the plurality of cells include the second target cell.

In conclusion, based on the embodiment shown in FIG. 6 and a related embodiment, it can be learned that, the first indication information received by the DU from the CU in step S602 indicates whether the terminal device is allowed to be handed over to the first target cell, and when the first indication information indicates that the terminal device is allowed to be handed over to the first target cell, the DU sends the first handover message to the terminal device in step S603. In other words, after the DU makes the cell handover decision result based on the first manner, the DU determines, in the CU decision manner, whether to initiate a cell handover process based on the first manner. In addition, when the CU indicates that the cell handover process of the terminal device is allowed to be initiated based on the first manner, the CU does not initiate the cell handover process of the terminal device based on a second manner, and therefore the DU initiates the cell handover process based on the first handover message. In this way, compared with a case in which the CU and the DU each send a cell handover command to the terminal device, the CU decision manner can enable the DU to determine whether to initiate the cell handover process of the terminal device based on the first manner, to avoid a cell handover failure caused by an unclear handover behavior of the terminal device, and improve reliability of the cell handover process.

The following describes an example of the implementation process shown in FIG. 6 with reference to an implementation example shown in FIG. 7.

A method shown in FIG. 7 includes the following steps.

Step F1: A DU sends an L1 and/or L2 handover request (L1/L2 HO request) to a CU.

Specifically, in step F1, the DU makes an L1 and/or L2 handover decision based on an L1 measurement result previously reported by a terminal device (for example, the implementation process of the beam measurement report in step 5 in FIG. 3c), and sends a request message to the CU in step F1, to request whether to allow L1 and/or L2 handover.

It may be understood that an L1 and/or L2 handover command may be the first handover message in step S601. To be specific, the L1 and/or L2 handover command indicates to hand over the terminal device from a source cell (denoted as a cell 1) to a first target cell (denoted as a cell 2). In other words, the request message in step F1 may also be used to request whether the terminal device is allowed to be handed over to the first target cell.

Step F2: The CU sends an L1 and/or L2 handover response (L1/L2 HO response) to the DU.

Specifically, the CU sends a response message to the DU in step F2, to indicate that the message in step F1 is successfully received.

For example, in step F2, the CU sends an F1AP message through an F1 interface, to indicate that information related to the L1/L2 handover decision sent by the DU is successfully received.

In an implementation, the response message in step F2 carries a field to indicate that the CU allows the DU to perform the L1/L2 handover. In addition, after the CU receives the message of the L1/L2 handover decision made by the DU in step 1, the CU stops an L3 handover decision (stop L3 HO decision).

Optionally, an occasion on which the CU stops the L3 handover decision may be before sending the message in step F2, or may be after sending the message in step F2. In addition, that the CU stops the L3 handover decision may be that a radio resource management (radio resource management, RRM) module/function of the CU stops the L3 handover decision, and/or the CU makes the L3 handover decision, but does not generate/send an L3 handover command.

In another implementation, a field is carried in the response message in step F2 to indicate that the CU does not allow (or rejects) the DU to perform the L1/L2 handover. In addition, after the CU receives the message of the L1/L2 handover decision made by the DU in step 1, the CU may still perform the L3 handover decision.

Optionally, that the CU performs the L3 handover decision may be that the RRM module/function of the CU performs the L3 handover decision, and/or when making the L3 handover decision, the CU further generates/sends the L3 handover command.

(Optional step) step F3: The DU sends an L1 and/or L2 handover command (L1/L2 HO Command) to the terminal device.

(Optional step) step F4: Perform the L1 and/or L2 handover (L1/L2 HO) between the terminal device and the DU.

(Optional step) step F5: The DU sends an L1 and/or L2 handover success (L1/L2 HO success) to the CU.

Specifically, when the response message in step F2 carries the field to indicate that the CU allows the DU to perform the L1/L2 handover, the DU triggers an implementation process of step F3 to step F5, so that the CU starts the L3 handover decision (start L3 HO decision) again after step F5. For an L1 and/or L2 handover process triggered by the DU based on the L1 and/or L2 handover command, refer to the descriptions in the foregoing embodiments. Details are not described herein again.

It can be learned from the implementation shown in FIG. 7 that, after the DU makes a cell handover decision result based on a first manner in step F1, the DU determines, in step F2 in a CU decision manner, whether to initiate a cell handover process based on the first manner. In addition, when the CU indicates that the cell handover process of the terminal device is allowed to be initiated based on the first manner, the CU does not initiate the cell handover process of the terminal device based on a second manner, that is, the DU initiates the cell handover process based on the first handover message in step F3 and step F4. In this way, compared with a case in which the CU and the DU each send a cell handover command to the terminal device, the CU decision manner can enable the DU to determine whether to initiate the cell handover process of the terminal device based on the first manner, to avoid a cell handover failure caused by an unclear handover behavior of the terminal device, and improve reliability of the cell handover process.

FIG. 8a is a diagram of a communication method according to this application. The method includes the following steps.

S801: A network device sends a first handover message.

In this embodiment, the network device sends the first handover message in step S801, and correspondingly, a terminal device receives the first handover message in step S801. The first handover message indicates to hand over the terminal device from a source cell to a first target cell in a first manner, and the first manner includes an L1-based cell handover manner and/or an L2-based cell handover manner.

The first handover message includes identification information of the first target cell. Optionally, the first handover message further includes identification information of the source cell.

S802: The network device sends a third handover message.

In this embodiment, the network device sends the third handover message in step S802, and correspondingly, the terminal device receives the third handover message in step S802. The third handover message indicates to hand over the terminal device from the source cell to a second target cell in a second manner, and the terminal device determines that a cell handover manner is the first manner or the second manner.

The third handover message includes identification information of the second target cell. Optionally, the third handover message further includes the identification information of the source cell.

S803: The terminal device determines that the cell handover manner is the first manner or the second manner.

In this embodiment, when a DU makes a cell handover decision result based on the first manner in step S401 and a CU makes a cell handover decision result based on the second manner in step S402, the terminal device determines, in step S803, that the cell handover manner is the first manner or the second manner.

In step S803, the terminal device may determine, in a plurality of implementations, that the cell handover manner is either of the first manner and the second manner, to avoid a conflict. The following provides descriptions by using a plurality of embodiments.

In a possible implementation, a sequence of performing step S801 and step S802 is not limited. To be specific, step S801 may be performed before step S802, or step S802 may be performed before step S801. In other words, the terminal device may separately receive the first handover message and the third handover message. For example, a handover message received by the terminal device earlier is the first handover message in step S801, and a handover message received by the terminal device later is the third handover message in step S802. For another example, a handover message received by the terminal device earlier is the third handover message in step S802, and a handover message received by the terminal device later is the first handover message in step S801.

In this implementation, after the terminal device separately receives the two handover messages, in step S803, when the terminal device determines that a cell in which the terminal device is currently located is different from a source cell corresponding to the later received handover message, the terminal device determines that the cell handover manner is a cell handover manner corresponding to the earlier received handover message; or when the terminal device determines that a cell in which the terminal device is currently located is the same as a source cell corresponding to the later received handover message, the terminal device determines that the cell handover manner is a cell handover manner corresponding to the later received handover message.

Specifically, after the terminal device receives the first handover message and the third handover message, the terminal device may determine whether the cell in which the terminal device is currently located is the same as the source cell corresponding to the later received handover message. In addition, when the cell in which the terminal device is currently located is different from the source cell corresponding to the later received handover message, the terminal device determines that the terminal device has been handed over to a target cell corresponding to the earlier received handover message, that is, the terminal device determines that the cell handover manner is the cell handover manner corresponding to the earlier received handover message, and the terminal device may discard (or ignore) the later received handover message. When the cell in which the terminal device is currently located is the same as the source cell corresponding to the later received handover message, the terminal device is not handed over to a target cell corresponding to the earlier received handover message, that is, the terminal device determines that the cell handover manner is the cell handover manner corresponding to the later received handover message, and the terminal device performs cell handover based on the later received handover message.

Optionally, after the terminal device discards (or ignores) a handover message, the terminal device may send indication information to the network device, to indicate that the terminal device discards (or ignores) the handover message.

In another possible implementation, the terminal device determines that the cell handover manner is the second manner, and the method further includes: The terminal device is handed over from the source cell to the second target cell in the second manner. Specifically, the terminal device always considers that the cell handover manner corresponding to the second manner needs to be performed. To be specific, regardless of whether the first handover message is received, after receiving the third handover message, the terminal device needs to be handed over from the source cell to the second target cell in the second manner.

In a possible implementation, after the terminal device receives the first handover message, the method further includes: The terminal device starts a timer. The terminal device discards the third handover message when the terminal device receives the third handover message before the timer expires; or the terminal device is handed over to the second target cell in the second manner when the terminal device receives the third handover message after the timer expires. Specifically, when the terminal device first receives the first handover message and then receives the third handover message, the terminal device may further start the timer after receiving the first handover message, and when receiving the third handover message before the timer expires, to avoid a failure of the cell handover process corresponding to the first manner, the terminal device determines that cell handover does not need to be performed based on the third handover message, that is, the terminal device determines to discard the third handover message. When receiving the third handover message after the timer expires, the terminal device determines that cell handover needs to be performed based on the third handover message, that is, the terminal device is handed over to the second target cell in the second manner.

In a possible implementation, that the terminal device determines that the cell handover manner is the first manner or the second manner includes: After the terminal device is successfully handed over to the first target cell in the first manner, the terminal device discards the third handover message; or after the terminal device fails to be handed over to the first target cell in the first manner, the terminal device is handed over to the second target cell in the second manner. Specifically, when the first handover message and the third handover message are carried in a same downlink data packet, the terminal device preferentially performs the cell handover process corresponding to the first manner, and after the terminal device is successfully handed over to the first target cell in the first manner, the terminal device discards the third handover message; or after the terminal device fails to be handed over to the first target cell in the first manner, the terminal device is handed over to the second target cell in the second manner, to improve a cell handover success rate.

In a possible implementation, that the terminal device determines that the cell handover manner is the first manner or the second manner includes: After the terminal device is successfully handed over to the second target cell in the second manner, the terminal device discards the first handover message; or after the terminal device fails to be handed over to the second target cell in the second manner, the terminal device is handed over to the first target cell in the first manner. Specifically, when the first handover message and the third handover message are carried in a same downlink data packet, the terminal device preferentially performs the cell handover process corresponding to the second manner, and after the terminal device is successfully handed over to the second target cell in the second manner, the terminal device discards the first handover message; or after the terminal device fails to be handed over to the second target cell in the second manner, the terminal device is handed over to the first target cell in the first manner, to improve a cell handover success rate.

In a possible implementation, that the terminal device determines that the cell handover manner is the first manner or the second manner includes: The terminal device is handed over to the second target cell in the second manner. Specifically, when the first handover message and the third handover message are carried in a same downlink data packet, in a process of parsing the downlink data packet, the terminal device first parses the first handover message corresponding to an underlying protocol stack and then obtains, through parsing, the third handover message corresponding to a higher layer protocol stack. Therefore, the terminal device first performs cell handover based on the first handover message, and after obtaining, through parsing, the third handover message, suspends the handover process corresponding to the first manner, and performs the handover process corresponding to the second manner, so that the terminal device is handed over to the second target cell in the second manner.

In a possible implementation, in the method shown in FIG. 8a, the method further includes: The terminal device sends a first measurement result, where the first measurement result is an L1 measurement result or an L3 measurement result, the L1 measurement result is a decision basis of the first manner, and the L3 measurement result is a decision basis of the second manner. Specifically, the network device makes a cell handover decision based on the measurement result reported by the terminal device, that is, L1 and/or L2 handover is obtained based on the L1 measurement result, and L3 handover is obtained based on the L3 measurement result. To prevent the network device from continuously sending the first handover message (that is, an L1 and/or L2 handover command) and the third handover message (that is, an L3 handover command) within short time, the terminal device may report only one of the L1 measurement result and the L3 measurement result, to avoid a cell handover failure caused by an unclear handover behavior of the terminal device due to a plurality of handover messages delivered by the network device, and improve reliability of the cell handover process.

It should be understood that this implementation may be implemented independently without depending on the method shown in FIG. 8a.

In a possible implementation, that the terminal device sends a first measurement result includes: The terminal device sends the L1 measurement result or the L3 measurement result when the terminal device determines that the terminal device is in a preset area. Specifically, when communication is performed in the preset area, the terminal device sends one of the L1 measurement result and the L3 measurement result, to avoid the cell handover failure caused by the unclear handover behavior of the terminal device due to the plurality of handover messages delivered by the network device, and improve reliability of the cell handover process.

Optionally, the preset area is a signal coverage area of one or more cells corresponding to a preset cell identifier, or the preset area is a signal coverage area of one or more SSBs corresponding to a preset SSB index. This is not limited herein.

In conclusion, based on the embodiment shown in FIG. 8a and a related embodiment, it can be learned that when the network device initiates the L1 and/or L2 cell handover process to the terminal device in step S801 based on the first handover message in step S801, and the network device initiates the L3 cell handover process to the terminal device in step S802 based on the third handover message in step S802, the terminal device determines, in step S803, that the cell handover manner is either of the first manner and the second manner, so that the terminal device can subsequently initiate the cell handover process based on the either of the first manner and the second manner. In other words, when the DU makes the cell handover decision result based on the first manner and the CU makes the cell handover decision result based on the second manner, the terminal device initiates the cell handover process based on the either of the first manner and the second manner in a terminal device decision manner, to avoid a cell handover failure caused by an unclear handover behavior of the terminal device, and improve reliability of the cell handover process.

With reference to the implementation example shown in FIG. 8b, the following describes an example of the implementation process shown in FIG. 8a by using an example in which a network device includes a CU and a DU.

A method shown in FIG. 8b includes the following steps.

Step G1: The DU sends an L1 and/or L2 handover command (L1/L2 HO Command) to a terminal device.

Step G2: The CU sends an L3 handover command (L3 HO Command) to the DU.

Step G3: Perform L1 and/or L2 handover (L1/L2 HO) between the terminal device and the DU.

Step G4: The DU sends an L3 handover command (L3 HO Command) to the terminal device.

Step G5: The terminal device rejects or performs L3 handover (reject or perform L3 HO).

It should be noted that, for a process in which the terminal device receives the L1 and/or L2 handover command, receives the L3 handover command, and performs the L1 and/or L2 handover in step G1 to step G3, refer to the descriptions in the foregoing embodiments. Details are not described herein again. A main difference between the embodiment shown in FIG. 8b and the foregoing embodiments lies in an implementation process of step G4 and step G5. The following provides further descriptions with reference to a plurality of implementation cases.

Implementation 1: The L3 handover command in step G4 carries identity information of a source cell.

Step G4: The DU sends the L3 handover command to the terminal device, where the handover command carries the identity information of the source cell in which the terminal device is located when an L3 handover decision is made.

Step G5: After receiving the L3 handover command, the terminal device compares the identity information of the source cell carried in the L3 handover command with identity information of a serving cell in which the terminal device is currently located, and if the identity information of the source cell carried in the L3 handover command does not match the identity information of the serving cell in which the terminal device is currently located, the terminal device does not perform the L3 handover.

Optionally, the terminal device sends a mismatch case/a case of rejecting the L3 handover to the DU, and the DU may further send the information to the CU. If the identity information of the source cell carried in the L3 handover command matches the identity information of the serving cell in which the terminal device is currently located, the terminal device performs the L3 handover.

Implementation 2: The terminal device always considers that an L3 handover decision needs to be made.

Step G4: The DU sends the L3 handover command to the terminal device (without source cell indication information).

Step G5: The terminal device performs the L3 handover, and validates configuration information of a target cell in the L3 handover command based on a cell configuration before the L1/L2 handover.

It should be understood that, in this embodiment, the terminal device is required to still retain configuration information of a source cell after performing the L1/L2 handover.

Implementation 3: The terminal device determines, based on a timer, whether the L3 handover needs to be performed.

After receiving the L1/L2 handover command or completing the L1/L2 handover, the terminal device starts a timer. After the timer expires, if the handover command in step G4 is received, the terminal device performs the L3 handover; or if the timer does not expire, the terminal device rejects the L3 handover/ignores the L3 handover command. Optionally, a case in which the terminal device rejects the L3 handover is sent to the DU, and the DU may further send the information to the CU.

The foregoing solutions describe a case in which the terminal device receives the L3 handover command after receiving the L1/L2 handover command. In another case, the terminal device receives the L1/L2 handover command in step G1 and the L3 handover command in step G4 in a same message. In this case, the terminal device may have the following behavior to avoid a configuration error and a handover failure.

Solution 1: The terminal device preferentially performs the L1/L2 handover.

In the solution 1, the terminal device buffers and retains both the received L1/L2 handover command and the received L3 handover command, and first performs the L1/L2 handover. After the L1/L2 handover succeeds, the terminal device discards/deletes the L3 handover command. If the L1/L2 handover fails (where the handover fails once, or a quantity of failures reaches a specified quantity, or the handover has not succeeded within specified time), the terminal device no longer performs the L1/L2 handover, but performs the L3 handover.

Solution 2: The terminal device preferentially performs the L3 handover.

In the solution 2, after reading the L1/L2 handover command, L1 (for example, a physical layer) and/or L2 (for example, a MAC layer) of the terminal device notify/notifies L3 (for example, an RRC layer), and wait/waits for L3 to indicate whether to perform the L1/L2 handover. L3 reads the L3 handover command and an indication reported by L1/L2, and determines to preferentially perform the L3 handover. In this case, L3 triggers the terminal device to perform the L3 handover, and does not indicate to perform the L1/L2 handover.

Solution 3: The terminal device performs handover in a protocol stack processing sequence.

In the solution 3, the terminal device receives the L1/L2 handover command and the L3 handover command. Because an underlying protocol stack first performs processing, the terminal device first decodes the L1/L2 handover signaling. In this case, the terminal device starts to perform the L1/L2 handover. When L3 of the terminal device decodes the L3 handover command, the terminal device is triggered to perform the L3 handover, and simultaneously L3 indicates L1/L2 to terminate the L1/L2 handover process.

In addition, in the implementation shown in FIG. 8b, because the network device makes a handover decision based on a measurement result reported by the terminal device, the L1/L2 handover may be based on an L1 measurement result, and the L3 handover may be based on an L3 measurement result. To prevent the network device from continuously sending the L1/L2 handover command and the L3 handover command within short time, the terminal device may report only one of the L1 measurement result and the L3 measurement result when moving in a preconfigured area.

Optionally, the preconfigured area may be a cell set preconfigured by a base station. When the terminal device moves in the cell set, the terminal device may report only one of the L1 measurement result and the L3 measurement result.

It can be learned from the implementation process shown in FIG. 8b that, according to a preset rule, the terminal device resolves a handover conflict problem that may occur when both an L1/L2 handover function and an L3 handover function are configured for the terminal device, to avoid a configuration failure and an unclear handover behavior of the terminal device, and ensure successful cell handover.

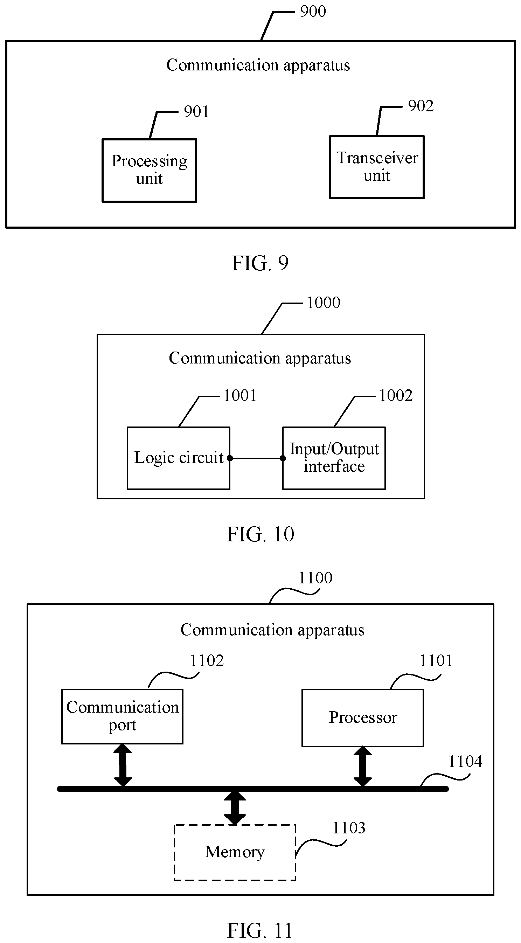

Refer to FIG. 9. An embodiment of this application provides a communication apparatus 900. The communication apparatus 900 can implement a function of any communication apparatus (including a terminal device, a CU, a DU, or the like) in the foregoing method embodiments, and therefore can also implement beneficial effects of the foregoing method embodiments.

In an implementation of the communication apparatus 900 shown in FIG. 9, the communication apparatus 900 may be a DU, or may be an integrated circuit, an element, or the like in the DU, for example, a chip. In the following embodiments, an example in which the communication apparatus 900 is a DU is used for description. The apparatus 900 includes a processing unit 901 and a transceiver unit 902. In an implementation in which the communication apparatus 900 is a DU, after the transceiver unit 902 is configured to send a first handover message to a terminal device, the transceiver unit 902 is further configured to receive a second handover message from a central unit CU, where the first handover message indicates to hand over the terminal device from a source cell to a first target cell in a first manner, the first manner includes an L1 and/or L2-based cell handover manner, the second handover message indicates to hand over the terminal device from the source cell to a second target cell in a second manner, and the second manner includes an L3-based cell handover manner. The processing unit 901 is configured to determine that a cell handover manner of the terminal device is the first manner or the second manner.

In a possible implementation, when a first condition is met, the processing unit 901 determines that the cell handover manner of the terminal device is the first manner, where the first condition includes at least one of the following: the processing unit 901 determines that the second handover message includes priority information indicating a priority of the second handover message and the DU determines that the priority indicated by the priority information is lower than a preset priority; the processing unit 901 determines that the terminal device is successfully handed over in the first manner; or the processing unit 901 determines that the transceiver unit 902 receives a first response message from the terminal device, where the first response message indicates that the first handover message is successfully received.

In a possible implementation, after the processing unit 901 determines that the cell handover manner of the terminal device is the first manner, the transceiver unit 902 is further configured to send at least one of the following to the CU: information indicating that the terminal device successfully completes cell handover in the first manner, information indicating that the terminal device is successfully handed over to the first target cell in the first manner, information indicating that the second handover message is discarded, or information indicating that the DU does not send a third handover message, where the third handover message indicates to hand over the terminal device from the source cell to the second target cell in the second manner.

In a possible implementation, when a second condition is met, the processing unit 901 determines that the cell handover manner of the terminal device is the second manner, where the second condition includes at least one of the following: the processing unit 901 determines that the second handover message includes first indication information, where the first indication information indicates to perform cell handover preferentially in the second manner; the processing unit 901 determines that the second handover message includes priority information indicating a priority of the second handover message and the DU determines that the priority indicated by the priority information is higher than a preset priority; the processing unit 901 determines that the terminal device fails to be handed over in the first manner; the processing unit 901 determines that the transceiver unit 902 receives a second response message from the terminal device, where the second response message indicates that the first handover message is not successfully received; or the processing unit 901 determines that the transceiver unit 902 does not receive a response message for the first handover message from the terminal device.

In a possible implementation, after the processing unit 901 determines that the cell handover manner of the terminal device is the second manner, the transceiver unit 902 is further configured to send a third handover message to the terminal device, where the third handover message indicates to hand over the terminal device from the source cell to the second target cell in the second manner.

In a possible implementation, the third handover message includes configuration information of the second target cell; or delta configuration information of the second target cell and second indication information, where the second indication information indicates the terminal device to perform delta configuration on the delta configuration information of the second target cell based on configuration information of the source cell.

In another implementation in which the communication apparatus 900 is a DU, the transceiver unit 902 is configured to send a first message to a CU, where the first message is used to request to hand over a terminal device to a first target cell in a first manner, and the first manner includes an L1-based cell handover manner and/or an L2-based cell handover manner. The transceiver unit 902 is further configured to receive first indication information from the CU, where the first indication information indicates whether the terminal device is allowed to be handed over to the first target cell. When the first indication information at the processing unit 901 indicates that the terminal device is allowed to be handed over to the first target cell, the transceiver unit 902 is further configured to send a first handover message to the terminal device, where the first handover message indicates to hand over the terminal device to the first target cell in the first manner.

In a possible implementation, the first target cell corresponds to the DU, and after the processing unit 901 determines that the transceiver unit 902 sends the first handover message based on the first indication information, and determines that the terminal device is successfully handed over to the first target cell, the transceiver unit 902 is further configured to send at least one of the following: information indicating that the terminal device successfully completes cell handover in the first manner, or information indicating that the terminal device is successfully handed over to the first target cell in the first manner.

In a possible implementation, the first target cell corresponds to the DU, and after the processing unit 901 determines that the transceiver unit 902 sends the first handover message based on the first indication information, and determines that the terminal device fails to be handed over to the first target cell, the transceiver unit 902 is further configured to send at least one of the following: information indicating that the terminal device fails to be handed over in the first manner, or information indicating that the terminal device fails to be handed over to the first target cell in the first manner.

In a possible implementation, when the processing unit 901 determines that the first indication information indicates that the terminal device is not allowed to be handed over to the first target cell, the transceiver unit 902 is further configured to receive a second handover message, where the second handover message indicates to hand over the terminal device to a second target cell in a second manner, and the second manner includes an L3-based cell handover manner. The transceiver unit 902 is further configured to send a third handover message, where the third handover message indicates to hand over the terminal device to the second target cell in the second manner, and the third handover message includes configuration information of the second target cell.

In a possible implementation, the first indication information is carried in a second message, and the second message indicates that the first message is successfully received.

In an implementation of the communication apparatus 900 shown in FIG. 9, the communication apparatus 900 may be a CU, or may be an integrated circuit, an element, or the like in the CU, for example, a chip. In the following embodiments, an example in which the communication apparatus 900 is a CU is used for description. The apparatus 900 includes a processing unit 901 and a transceiver unit 902. In an implementation in which the communication apparatus 900 is a CU, the processing unit 901 is configured to determine a second handover message, where the second handover message indicates to hand over a terminal device from a source cell to a second target cell in a second manner, and the second manner includes an L3-based cell handover manner. The transceiver unit 902 is configured to send the second handover message to a DU. The transceiver unit 902 is further configured to receive at least one of the following from the DU: information indicating that the terminal device successfully completes cell handover in a first manner, information indicating that the terminal device is successfully handed over to a first target cell in the first manner, information indicating that the second handover message is discarded, or information indicating that the DU does not send a third handover message, where the third handover message indicates to hand over the terminal device from the source cell to the second target cell in the second manner; or the transceiver unit 902 is further configured to receive at least one of the following from the DU: information indicating that the terminal device successfully performs cell handover in the second manner, or information indicating that the terminal device is successfully handed over to the second target cell in the second manner.

In another implementation in which the communication apparatus 900 is a CU, the transceiver unit 902 is configured to receive a first message, where the first message is used to request to hand over a terminal device to a first target cell in a first manner, and the first manner includes an L1-based cell handover manner and/or an L2-based cell handover manner. The processing unit 901 is configured to determine first indication information, where the first indication information indicates whether the terminal device is allowed to be handed over to the first target cell. The transceiver unit 902 is further configured to send the first indication information.

In a possible implementation, the first handover message includes at least one of the following: identification information of the first target cell, beam identification information of the first target cell, timing advance TA information of the first target cell, information indicating whether to initiate random access to the first target cell, or a radio network temporary identifier RNTI of the terminal device in the first target cell.

In a possible implementation, the first target cell corresponds to the DU, and the transceiver unit 902 is further configured to receive at least one of the following: information indicating that the terminal device successfully completes cell handover in the first manner, or information indicating that the terminal device is successfully handed over to the first target cell in the first manner.

In a possible implementation, the first target cell corresponds to the DU, and the transceiver unit 902 is further configured to receive at least one of the following: information indicating that the terminal device fails to be handed over in the first manner, or information indicating that the terminal device fails to be handed over to the first target cell in the first manner.

In a possible implementation, when the processing unit 901 determines that the first indication information indicates that the terminal device is not allowed to be handed over to the first target cell, the transceiver unit 902 is further configured to send a second handover message, where the second handover message indicates to hand over the terminal device to a second target cell in a second manner, and the second manner includes an L3-based cell handover manner.

In an implementation of the communication apparatus 900 shown in FIG. 9, the communication apparatus 900 may be a terminal device, or may be an integrated circuit, an element, or the like in the terminal device, for example, a chip. In the following embodiments, an example in which the communication apparatus 900 is a terminal device is used for description. The apparatus 900 includes a processing unit 901 and a transceiver unit 902. In an implementation in which the communication apparatus 900 is a terminal device, the transceiver unit 902 is configured to receive a first handover message from a DU, where the first handover message indicates to hand over the terminal device from a source cell to a first target cell in a first manner, and the first manner includes an L1-based cell handover manner and/or an L2-based cell handover manner. The transceiver unit 902 is further configured to receive a third handover message from the DU, where the third handover message indicates to hand over the terminal device from the source cell to a second target cell in a second manner. The processing unit 901 is configured to determine that a cell handover manner is the first manner or the second manner.

In a possible implementation, after the transceiver unit 902 receives the first handover message, the transceiver unit 902 receives the third handover message.

In a possible implementation, that the processing unit 901 determines that the cell handover manner is the first manner or the second manner includes: When the processing unit 901 determines that a current cell is different from the source cell, the processing unit 901 determines that the cell handover manner is a cell handover manner corresponding to an earlier received handover message; or when the processing unit 901 determines that a current cell is the same as the source cell, the processing unit 901 determines that the cell handover manner is a cell handover manner corresponding to a later received handover message.

In a possible implementation, the processing unit 901 determines that the cell handover manner is the second manner, and the processing unit 901 is further configured to be handed over from the source cell to the second target cell in the second manner.

In a possible implementation, after the transceiver unit 902 receives the first handover message, the processing unit 901 starts a timer; and before the timer expires, when the processing unit 901 determines that the transceiver unit 902 receives the third handover message, the processing unit 901 is further configured to determine to discard the third handover message; or
after the timer expires, when the processing unit 901 determines that the transceiver unit 902 receives the third handover message, the processing unit 901 is further configured to be handed over to the second target cell in the second manner.

In a possible implementation, that the processing unit 901 determines that the cell handover manner is the first manner or the second manner includes: After the processing unit 901 is successfully handed over to the first target cell in the first manner, the processing unit 901 is further configured to determine to discard the third handover message; or after the processing unit 901 fails to be handed over to the first target cell in the first manner, the processing unit 901 is further configured to be handed over to the second target cell in the second manner.

In a possible implementation, that the processing unit 901 determines that the cell handover manner is the first manner or the second manner includes: After the processing unit 901 is successfully handed over to the second target cell in the second manner, the processing unit 901 is further configured to determine to discard the first handover message; or after the processing unit 901 fails to be handed over to the second target cell in the second manner, the processing unit 901 is further configured to be handed over to the first target cell in the first manner.

In a possible implementation, the processing unit 901 is specifically configured to be handed over to the second target cell in the second manner.

In a possible implementation, the transceiver unit 902 is further configured to send a first measurement result, where the first measurement result is an L1 measurement result or an L3 measurement result, the L1 measurement result is a decision basis of the first manner, and the L3 measurement result is a decision basis of the second manner.

In a possible implementation, when the processing unit 901 determines to be in a preset area, the transceiver unit 902 is further configured to send the first measurement result, where the preset area is a signal coverage area of one or more cells corresponding to a preset cell identifier.

In another implementation in which the communication apparatus 900 is a terminal device, after the transceiver unit 902 is configured to receive a first handover message, the transceiver unit 902 is further configured to receive a third handover message, where the first handover message indicates to hand over the terminal device from a source cell to a first target cell in a first manner, the first manner includes an L1-based cell handover manner and/or an L2-based cell handover manner, and the third handover message indicates to hand over the terminal device from the source cell to a second target cell in a second manner. The processing unit 901 is configured to be handed over to the second target cell in the second manner.

It should be noted that for content such as an information execution process of the units of the communication apparatus 900, specifically refer to the descriptions in the foregoing method embodiments of this application. Details are not described herein again.

FIG. 10 is another diagram of a structure of a communication apparatus 1000 according to this application. The communication apparatus 1000 includes at least an input/output interface 1002. The communication apparatus 1000 may be a chip or an integrated circuit.

Optionally, the communication apparatus further includes a logic circuit 1001.

The receiving unit 901 and the sending unit 902 shown in FIG. 9 may be a communication interface. The communication interface may be the input/output interface 1002 in FIG. 10. The input/output interface 1002 may include an input interface and an output interface. Alternatively, the communication interface may be a transceiver circuit, and the transceiver circuit may include an input interface circuit and an output interface circuit.

In a possible implementation, the processing unit 901 in the communication apparatus 900 shown in FIG. 9 (or the processing unit 901 in the communication apparatus 900 shown in FIG. 9) may be the logic circuit 1001 in FIG. 10.

Optionally, the logic circuit 1001 may be a processing apparatus, and some or all of functions of the processing apparatus may be implemented by software. Some or all of the functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may only include the processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate array, FPGA), application-specific integrated circuits (application-specific integrated circuit, ASIC), system on chips (system on chip, SoC), central processor units (central processor unit, CPU), network processors (network processor, NP), digital signal processing circuits (digital signal processor, DSP), micro controller units (micro controller unit, MCU), programmable controllers (programmable logic device, PLD), another integrated chip, any combination of the foregoing chips or processors, or the like.

FIG. 11 shows a communication apparatus 1100 in the foregoing embodiments according to an embodiment of this application. The communication apparatus 1100 may be specifically a communication apparatus serving as a terminal device in the foregoing embodiments. An example shown in FIG. 11 is that the terminal device is implemented as the terminal device (or a component in the terminal device).

In a possible diagram of a logical structure of the communication apparatus 1100, the communication apparatus 1100 may include but is not limited to at least one processor 1101 and a communication port 1102.

Further, optionally, the apparatus may include at least one of a memory 1103 and a bus 1104. In this embodiment of this application, the at least one processor 1101 is configured to perform control processing on an action of the communication apparatus 1100.

In addition, the processor 1101 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that, the communication apparatus 1100 shown in FIG. 11 may be specifically configured to implement steps implemented by the terminal device in the foregoing method embodiments, and implement technical effects corresponding to the terminal device. For a specific implementation of the communication apparatus shown in FIG. 11, refer to the descriptions in the foregoing method embodiments. Details are not described herein again.

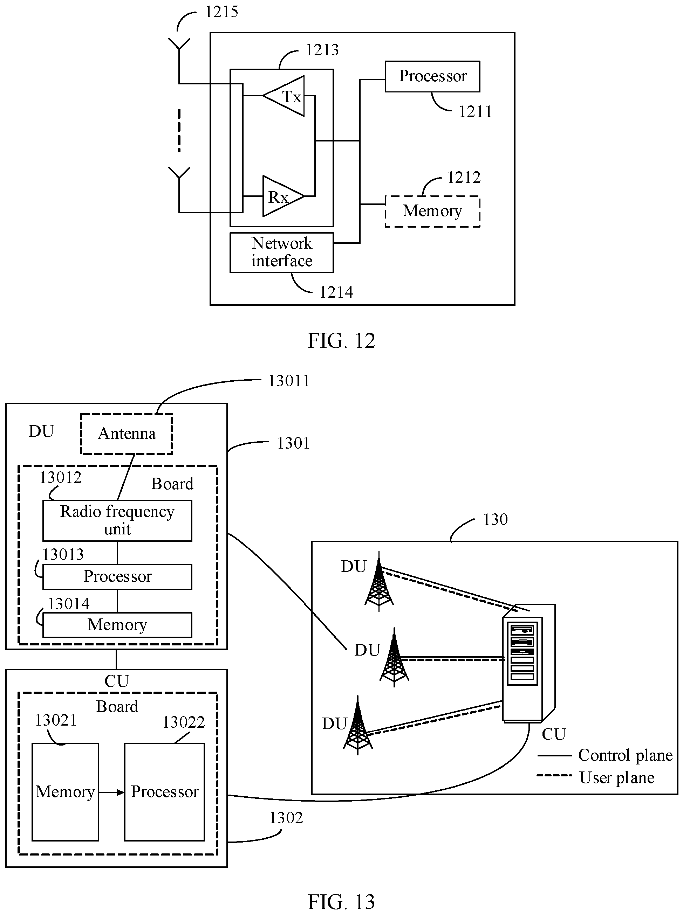

FIG. 12 is a diagram of a structure of a communication apparatus 1200 in the foregoing embodiments according to an embodiment of this application. The communication apparatus 1200 may be specifically a communication apparatus serving as a network device (for example, a CU or a DU) in the foregoing embodiments. For a structure of the communication apparatus, refer to the structure shown in FIG. 12.

The communication apparatus 1200 includes at least one processor 1211 and at least one network interface 1214. Further, optionally, the communication apparatus includes at least one memory 1212, at least one transceiver 1213, and one or more antennas 1215. The processor 1211, the memory 1212, the transceiver 1213, and the network interface 1214 are connected, for example, through a bus. In this embodiment of this application, the connection may include various interfaces, transmission lines, buses, or the like. This is not limited in this embodiment. The antenna 1215 is connected to the transceiver 1213. The network interface 1214 is configured to enable the communication apparatus to communicate with another communication device through a communication link. For example, the network interface 1214 may include a network interface between the communication apparatus and a core network device, for example, an S1 interface. The network interface may include a network interface between the communication apparatus and another communication apparatus (for example, another network device or core network device), for example, an X2 or Xn interface.

The processor 1211 is mainly configured to process a communication protocol and communication data; control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor 1211 in FIG. 12. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to enhance a processing capability, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1212 may exist independently, and is connected to the processor 1211. Optionally, the memory 1212 may be integrated with the processor 1211, for example, integrated into one chip. The memory 1212 can store program code for executing the technical solution in embodiments of this application, and the processor 1211 controls execution of the program code. Various types of executed computer program code may also be considered as drivers of the processor 1211.

FIG. 12 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1213 may be configured to support receiving or sending of a radio frequency signal between the communication apparatus and a terminal, and the transceiver 1213 may be connected to the antenna 1215. The transceiver 1213 includes a transmitter Tx and a receiver Rx. Specifically, the one or more antennas 1215 may receive radio frequency signals. The receiver Rx of the transceiver 1213 is configured to receive the radio frequency signal from the antenna, convert the radio frequency signal into a digital baseband signal or a digital intermediate frequency signal, and provide the digital baseband signal or the digital intermediate frequency signal to the processor 1211, so that the processor 1211 performs further processing, for example, demodulation processing and decoding processing, on the digital baseband signal or the digital intermediate frequency signal. In addition, the transmitter Tx of the transceiver 1213 is further configured to receive a modulated digital baseband signal or a modulated digital intermediate frequency signal from the processor 1211, convert the modulated digital baseband signal or the modulated digital intermediate frequency signal into a radio frequency signal, and send the radio frequency signal through the one or more antennas 1215. Specifically, the receiver Rx may selectively perform one-level or multi-level down-conversion mixing and analog-to-digital conversion on the radio frequency signal, to obtain the digital baseband signal or the digital intermediate frequency signal. A sequence of the down-conversion mixing and the analog-to-digital conversion is adjustable. The transmitter Tx may selectively perform one-level or multi-level up-conversion mixing and digital-to-analog conversion on the modulated digital baseband signal or the modulated digital intermediate frequency signal, to obtain the radio frequency signal. A sequence of the up-conversion mixing and the digital-to-analog conversion is adjustable. The digital baseband signal and the digital intermediate frequency signal may be collectively referred to as a digital signal.

The transceiver 1213 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes the receiving unit and the sending unit. The receiving unit may also be referred to as a receiver, an input port, a receiver circuit, or the like. The sending unit may be referred to as a transmitter machine, a transmitter, a transmitter circuit, or the like.

It should be noted that, the communication apparatus 1200 shown in FIG. 12 may be specifically configured to implement steps implemented by the network device (for example, the CU or the DU) in the foregoing method embodiments, and implement technical effects corresponding to the network device. For a specific implementation of the communication apparatus 1200 shown in FIG. 12, refer to the descriptions in the foregoing method embodiments. Details are not described herein again.

FIG. 13 is a diagram of a structure of a network device according to an embodiment of this application. The network device may be of a CU-DU split architecture, that is, an implementation diagram in which a CU and a DU are located in a same network device in any one of the foregoing embodiments.

As shown in FIG. 13, the network device may be configured to implement a function of the network device in the foregoing method embodiments.

The network device may include one or more DUs 1301 and one or more CUs 1302. The DU 1301 may include at least one antenna 13011, at least one radio frequency unit 13012, at least one processor 13013, and at least one memory 13014. The DU 1301 part is mainly configured to receive and send a radio frequency signal, perform conversion between a radio frequency signal and a baseband signal, and perform partial baseband processing. The CU 1302 may include at least one processor 13022 and at least one memory 13021. The CU 1302 and the DU 1301 may communicate with each other through an interface. A control plane (control plane) interface may be F1-C, and a user plane (user Plane) interface may be F1-U.

The CU 1302 part is mainly configured to perform baseband processing, control a base station, and the like. The DU 1301 and the CU 1302 may be physically arranged together, or may be physically arranged separately, that is, a distributed base station. The CU 1302 is a control center of the base station, may also be referred to as a processing unit, and is mainly configured to implement a baseband processing function. For example, the CU 1302 may be configured to control the base station to perform an operation procedure related to the network device in the foregoing method embodiments.

Specifically, baseband processing on the CU and the DU may be divided based on a protocol layer of a wireless network. For details, refer to the foregoing content.

In an instance, the CU 1302 may include one or more boards, and a plurality of boards may jointly support a radio access network (for example, a 5G network) of a single access standard, or may separately support radio access networks (for example, an LTE network, a 5G network, or another access network) of different access standards. The memory 13021 and the processor 13022 may serve one or more boards. In other words, a memory and a processor may be disposed on each board. Alternatively, a plurality of boards may share a same memory and a same processor. In addition, a necessary circuit may further be disposed on each board. The DU 1301 may include one or more boards, and a plurality of boards may jointly support a radio access network (for example, a 5G network) of a single access standard, or may separately support radio access networks (for example, an LTE network, a 5G network, or another access network) of different access standards. The memory 13014 and the processor 13013 may serve one or more boards. In other words, a memory and a processor may be disposed on each board. Alternatively, a plurality of boards may share a same memory and a same processor. In addition, a necessary circuit may further be disposed on each board.

Optionally, the CU 1302 may perform transmission with a child node of the network device through the DU 1301. The CU 1302 may be connected to another network device through an interface. The CU 1302 may receive data and/or a message from the another network device (for example, a CU of the another network device) through the interface, or the CU 1302 may send data and/or a message to the another network device through the interface.

An embodiment of this application further provides a computer-readable storage medium storing one or more computer-executable instructions. When the computer-executable instructions are executed by a processor, the processor performs the method in the possible implementations of the terminal device in the foregoing embodiments.

An embodiment of this application further provides a computer-readable storage medium storing one or more computer-executable instructions. When the computer-executable instructions are executed by a processor, the processor performs the method in the possible implementations of the network device (for example, the CU and/or the DU) in the foregoing embodiments.

An embodiment of this application further provides a computer program product (or referred to as a computer program) storing one or more computers. When the computer program product is executed by a processor, the processor performs the method in the possible implementations of the foregoing terminal device.

An embodiment of this application further provides a computer program product storing one or more computers. When the computer program product is executed by a processor, the processor performs the method in the possible implementations of the foregoing network device (for example, the CU and/or the DU).

An embodiment of this application further provides a chip system. The chip system includes at least one processor, configured to support a communication apparatus in implementing a function in the possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device in the foregoing method embodiments.

An embodiment of this application further provides a chip system. The chip system includes at least one processor, configured to support a communication apparatus in implementing a function in the possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the network device (for example, the CU and/or the DU) in the foregoing method embodiments.

An embodiment of this application further provides a communication system. The network system architecture includes the terminal device and the network device (for example, the CU and/or the DU) in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, comprising:
after a distributed unit DU sends a first handover message to a terminal device, receiving, by the DU, a second handover message from a central unit CU, wherein the first handover message indicates to hand over the terminal device from a source cell to a first target cell in a first manner, the first manner comprises an L1 and/or L2-based cell handover manner, the second handover message indicates to hand over the terminal device from the source cell to a second target cell in a second manner, and the second manner comprises an L3-based cell handover manner; and
determining, by the DU, that a cell handover manner of the terminal device is the first manner or the second manner.

2. The method according to claim 1, wherein when a first condition is met, the DU determines that the cell handover manner of the terminal device is the first manner, wherein the first condition comprises at least one of the following:
the DU determines that the second handover message comprises priority information indicating a priority of the second handover message and the DU determines that the priority indicated by the priority information is lower than a preset priority;
the DU determines that the terminal device is successfully handed over in the first manner; or
the DU determines that a first response message is received from the terminal device, wherein the first response message indicates that the first handover message is successfully received.

3. The method according to claim 2, wherein after the DU determines that the cell handover manner of the terminal device is the first manner, the DU sends at least one of the following to the CU:
information indicating that the terminal device successfully completes cell handover in the first manner, information indicating that the terminal device is successfully handed over to the first target cell in the first manner, information indicating that the second handover message is discarded, or information indicating that the DU does not send the third handover message, wherein the third handover message indicates to hand over the terminal device from the source cell to the second target cell in the second manner.

4. The method according to claim 1, wherein when a second condition is met, the DU determines that the cell handover manner of the terminal device is the second manner, wherein the second condition comprises at least one of the following:
the DU determines that the second handover message comprises first indication information, wherein the first indication information indicates to perform cell handover preferentially in the second manner;
the DU determines that the second handover message comprises priority information indicating a priority of the second handover message and the DU determines that the priority indicated by the priority information is higher than a preset priority;
the DU determines that the terminal device fails to be handed over in the first manner;
the DU determines that a second response message is received from the terminal device, wherein the second response message indicates that the first handover message is not successfully received; or
the DU determines that a response message for the first handover message is not received from the terminal device.

5. The method according to claim 4, wherein after the DU determines that the cell handover manner of the terminal device is the second manner, the method further comprises:
sending, by the DU, a third handover message to the terminal device, wherein the third handover message indicates to hand over the terminal device from the source cell to the second target cell in the second manner.

6. The method according to claim 5, wherein the third handover message comprises:
configuration information of the second target cell; and
delta configuration information of the second target cell and second indication information, wherein the second indication information indicates the terminal device to perform delta configuration on the delta configuration information of the second target cell based on configuration information of the source cell.

7. A communication apparatus, comprising a processing unit and a transceiver unit, wherein the processing unit and the transceiver unit are configured to perform the method according to any one of claims 1 to 6.

8. A communication apparatus, comprising at least one processor, coupled to a memory, wherein
the memory is configured to store a program or instructions; and
the at least one processor is configured to execute the program or the instructions, so that the apparatus implements the method according to any one of claims 1 to 6.

9. A computer-readable storage medium, wherein the medium stores instructions, and when the instructions are executed by a computer, the method according to any one of claims 1 to 6 is implemented.

10. A computer program product, comprising instructions, wherein when the instructions are run on a computer, the computer is enabled to perform the method according to any one of claims 1 to 6.
